# EUROPEAN PATENT SPECIFICATION

(11) **EP 4 540 138 B1**
(45) Date of publication and mention of the grant of the patent: **15.04.2026**
(21) Application number: 23739659.3
(22) Date of filing: 14.06.2023
(51) Int. Cl.: B64U 10/16, B64U 20/65, B64U 30/29, B64U 50/19, B64U 50/23, B64U 60/50, B64U 70/83, B64U 30/297, B64U 101/26, B64U 101/30

(54) **UAS SYSTEM FOR CARRYING OUT TASKS OR ACTIVITIES ON TARGETS ARRANGED AT A CERTAIN HEIGHT FROM THE GROUND**
SYSTEMS DES TYPS UNBEMANNTES FLUGOBJEKT ZUM ERFÜLLEN VON AUFGABEN ODER AKTIVITÄTEN AN ZIELOBJEKTEN, DIE AUF EINER GEWISSEN HÖHE ÜBER GRUND ANGEORDNET SIND
SYSTÈME DU TYPE AÉRONEF SANS ÉQUIPAGE POUR EXECUTER DES TÂCHES OU ACTIVITÉS À L'ENVERS DE CIBLES POSITIONÉS À UNE CERTAINE ALTITUDE DE LA TERRE

(30) Priority: 15.06.2022 EP 22179279; 10.11.2022 IT 202200023235
(43) Date of publication of application: 23.04.2025
(73) Proprietor: Terna S.p.A., 00156 Roma (IT)
(72) Inventor: FORTELEONI, Marco, 00156 Roma RM (IT); SPADINI, Guido, 00156 Roma RM (IT); D'ALONZO, Lorenzo, 00156 Roma RM (IT); OBBERMITO, Roberto, 00156 Roma RM (IT); CESONI, Raffaello, 00156 Roma RM (IT); TONELLI, Flavio, 00156 Roma RM (IT); BELLEZZA QUATER, Paolo, 00156 Roma RM (IT)
(74) Representative: Perani & Partners S.p.A.
(86) International application number: PCT/IB2023/056139
(87) International publication number: WO 2023/242758

(56) References cited:
- CN-A- 111 169 637
- SUAREZ ALEJANDRO ET AL: "Experimental Evaluation of Aerial Manipulation Robot in Contact With 15 kV Power Line: Shielded and Long Reach Configurations", IEEE ACCESS, IEEE, USA, vol. 9, 1 July 2021 (2021-07-01), pages 94573 - 94585, XP011865509, DOI: 10.1109/ACCESS.2021.3093856
- RASHAD RAMY ET AL: "Fully Actuated Multirotor UAVs: A Literature Review", IEEE ROBOTICS & AUTOMATION MAGAZINE, IEEE SERVICE CENTER, PISCATAWAY, NJ, US, vol. 27, no. 3, 1 September 2020 (2020-09-01), pages 97 - 107, XP011808253, ISSN: 1070-9932, [retrieved on 20200910], DOI: 10.1109/MRA.2019.2955964

## Description

### Technical field

The present invention generally refers to an aircraft system without any on-board pilot/crew (typically defined as "Unmanned Aircraft System" - UAS) to carry out complex, critical, difficult and/or hazardous tasks or activities at a given height from the ground, especially on targets/structures/infrastructures arranged, or having parts positioned, at a certain altitude from the ground.

For example, the present invention may be advantageously used in order to carry out electric measurements (e.g., current, voltage, resistance, etc.), repairs and/or operations (e.g., maintenance, testing, etc.) on conductors of a High-Voltage (HV) aerial electric line.

More generally, the UAS system according to the present invention may be advantageously used in order to carry out tasks or activities of any type on targets/structures/infrastructures of any type arranged, or comprising parts positioned, at a certain height from the ground.

In this regard, it is worth highlighting the fact that hereinafter the present invention will be described, for simplicity's sake and merely by way of example but not limitation or restriction, making explicit reference to carrying out tasks/activities on HV aerial power lines, without thereby losing generality.

Indeed, as explained above, the UAS system according to the present invention may be advantageously used without requiring any substantial changes to carry out tasks, activities or operations (e.g., maintenance, repair, testing, etc.) on a target, structure or infrastructure of any other type disposed, or having parts positioned, at a certain altitude from the ground.

### Background art

As known, an UAS system is characterized by using at least an aerial vehicle without any on-board pilot/crew (commonly known as drone) which may be remotely piloted from one or more ground stations and/or from an on-board computer (which, in some cases, may cause the drone to perform tasks autonomously). For example, drones are known, so-called multicopters (or multirotors), which are provided with four, six, eight or more rotors.

Such aerial vehicles have a known limitation in that a drone is generally not able to operate instruments, devices, systems or, more generally, payloads ("end effector" in the robotics field), having a not negligible weight and cantilevered with respect to the centre of gravity of the drone. Indeed, for this purpose, the drone would have to be equipped with a robotic system having such a size and features making the robotic system and, therefore, the drone itself transporting the same, excessively large and heavy.

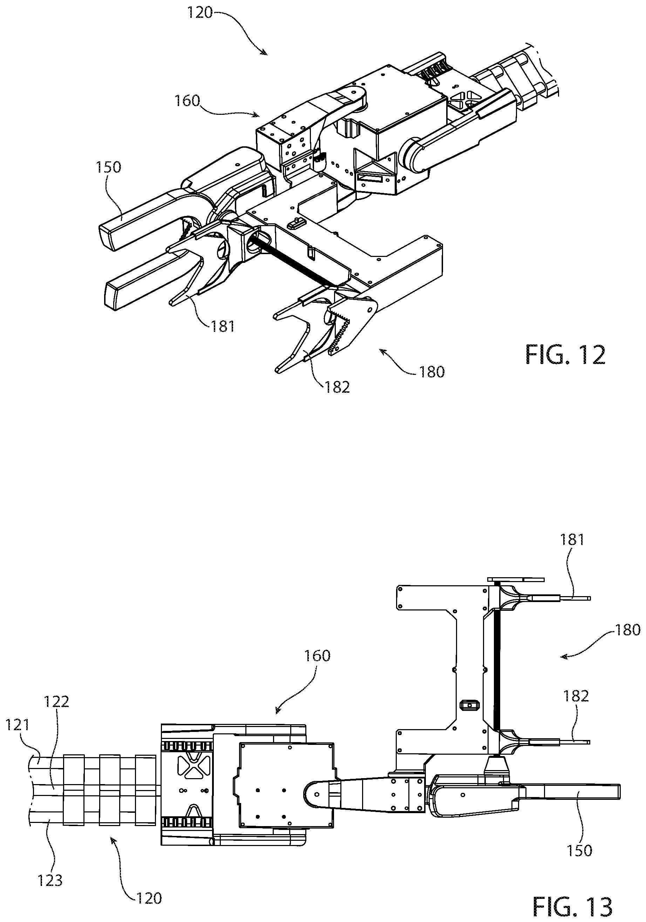

Such a limitation actually prevents (or in any case makes it especially difficult) to perform tasks or activities at a certain height from the ground by means of a drone in every case such tasks/activities require transporting and operating a payload having a not negligible weight and cantilevered with respect to the centre of gravity of the drone, for example in order to carry out electric measurements (e.g., current, voltage, resistance, etc.), repairs and/or operations (e.g., maintenance or testing) on conductors of a High-Voltage (HV) aerial electric line. The publication "UAREZ ALEJANDRO ET AL: "Experimental Evaluation of Aerial Manipulation Robot in Contact With 15 kV Power Line: Shielded and Long Reach Configurations",IEEE ACCESS, IEEE, USA, vol. 9, 1 July 2021 (2021-07-01), pages 94573-94585" describes and shows in figure 12 an unmanned aerial vehicle for working on electric power lines, the UAV having six rotors and a robotic arm.

### Subject matter of the invention

In view of what has been explained above, a general object of the present invention is, therefore, to provide a novel system based on the use of a drone capable of overcoming the above-mentioned technical limitations of known UAS systems.

Furthermore, a first specific object of the present invention is to provide a novel UAS system capable of very precisely transporting and operating a payload (or end effector) having a not negligible weight in order to carry out tasks or activities on targets/structures/infrastructures arranged, or having parts positioned, at a certain altitude from the ground.

In addition, a second specific object of the present invention is to provide a novel UAS system capable of very precisely transporting and operating instruments, devices or systems to carry out complex, critical, difficult and/or hazardous tasks or activities on critical targets/structures/infrastructures arranged, or having parts positioned, at a certain altitude from the ground, such as conductors of a HV aerial electric line, thereby avoiding human operators intervention.

To achieve these and other objects, the present invention is directed to an UAS system as defined in the appended claims.

### Brief description of the drawings

For a better understanding of the present invention, some preferred embodiments, provided merely by way of explanatory but non-limiting example, are now illustrated with reference to the attached drawings (not to scale), in which:
FIGS. 1-4 illustrate an air unit of an UAS system according to one embodiment of the present invention;
FIGS. 5 and 6 illustrate a multicopter drone of the air unit shown in FIGS. 1-4;
FIGS. 7 and 8 show said air unit with parts removed for better clarity of the illustration;
FIG. 9 shows an enlarged view of a group of sensors of said air unit;
FIG. 10 schematically illustrates a high-level functional architecture of an UAS system according to one embodiment of the present invention;
FIG. 11 schematically illustrates a high-level functional architecture of a flight termination system of the UAS system of FIG. 10;
FIGS. 12 and 13 show a final portion of a front arm of the air unit shown in FIGS. 1-4; and
FIG. 14 schematically illustrates an autonomous navigation/guidance algorithm of the air unit shown in FIGS. 1-4.

### Description of embodiments of the invention

The following description is provided in order to allow a technician in the field to practice and use the invention. Various modifications to the embodiments set out herein will become readily apparent to those skilled in the art and the general principles disclosed herein may be applied to other embodiments and applications without departing from the protective scope of the present invention, which is only limited by the appended claims.

Accordingly, the present invention should not be regarded as limited only to the embodiments described and shown herein, but rather as pertaining to the broader protective scope according to the features defined in the appended claims.

As explained above, hereinafter the present invention will be described in detail, for simplicity's sake and merely by way of example but not limitation or restriction, explicitly referring to carrying out tasks/activities on High-Voltage (HV) aerial power lines, without thereby losing generality.

Indeed, again as explained hereinabove, the UAS system according to the present invention may be advantageously used, without requiring any substantial changes, to carry out tasks, activities or operations (e.g., maintenance, repair, testing, etc.) on a target, structure or infrastructure of any other type disposed, or having parts positioned, at a certain altitude from the ground.

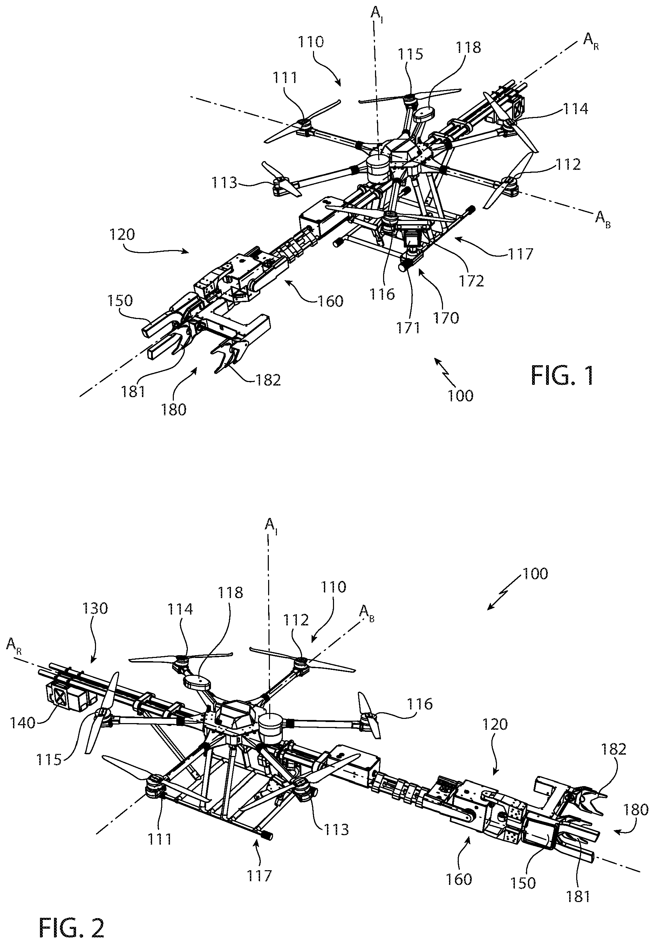

For a better understanding of the present invention, FIGS. 1-4 illustrate an air unit (denoted by 110 as a whole) of an UAS system according to a preferred, yet not limiting or restrictive embodiment of the present invention, wherein said UAS system is intended to be used in specialized and maintenance activities for electric resistance measurement of conductors, connectors and anchor sets of HV aerial power lines by using a measuring instrument, such as an Ohmstik-type instrument.

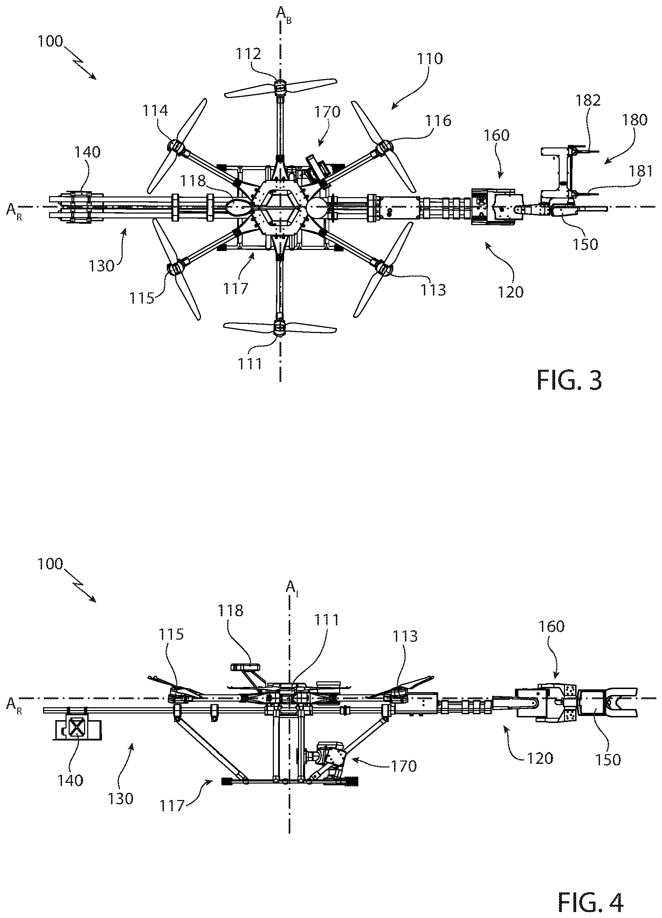

In particular, FIGS. 1 and 2 represent two different perspective views of the air unit 100, FIG. 3 represents a top view of the air unit 100 and FIG. 4 represents a side view of said air unit 100.

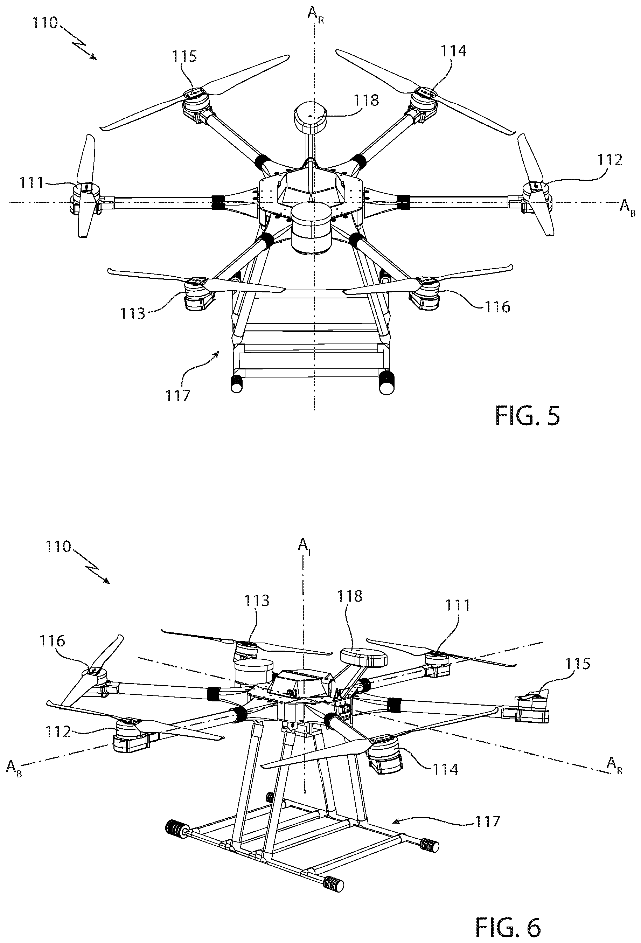

As illustrated in FIGS. 1-4, the air unit 100 includes a multicopter drone (denoted by 110 as a whole) provided with six rotors 111, 112, 113, 114, 115, 116. In this regard, for a better understanding of the present invention, in FIGS. 5 and 6 two different perspective views only of the drone 110 are provided.

The air unit 100 extends mainly along a predefined (longitudinal) roll axis AR of said air unit 100, namely of the drone 110, wherein said predefined roll axis AR passes through, or in any case near to, a centre of gravity (not illustrated) of the air unit 100 or of said drone 110.

The rotors 111, 112, 113, 114, 115, 116 of the drone 110 are arranged symmetrically (preferably according to a star configuration) around a predefined (vertical) yaw axis AI which passes through, or in any case near to, said centre of gravity and is perpendicular to the predefined roll axis AR, wherein:
- a first rotor 111 and a second rotor 112 are arranged
   - along a predefined (transverse) pitch axis AB which passes through, or in any case near to, said centre of gravity and is perpendicular both to the predefined roll axis AR and to the predefined yaw axis AI,
   - symmetrically and on opposite sides with respect to both the predefined roll axis AR and the predefined yaw axis AI;
- a third rotor 113 and a fourth rotor 114 are arranged
   - on opposite sides with respect to the predefined roll axis AR,
   - symmetrically and on opposite sides with respect to the predefined yaw axis AI,
   - along a first predefined axis which
      - passes through, or in any case near to, said centre of gravity,
      - lies on a given horizontal plane defined by the predefined roll axis AR and the predefined pitch axis AB and
      - is perpendicular to the predefined yaw axis AI;
- a fifth rotor 115 and a sixth rotor 116 are arranged
   - on opposite sides with respect to the predefined roll axis AR,
   - symmetrically and on opposite sides with respect to the predefined yaw axis AI,
   - along a second predefined axis which
      - passes through, or in any case near to, said centre of gravity,
      - lies on the given horizontal plane and
      - is perpendicular both to the predefined yaw axis AI and to the first predefined axis;
- the first rotor 111, the third rotor 113 and the fifth rotor 115 are arranged on the same side with respect to the predefined roll axis AR; and
- the second rotor 112, the fourth rotor 114 and the sixth rotor 116 are arranged on the same side with respect to the predefined roll axis AR opposite to the side where the first rotor 111, the third rotor 113 and the fifth rotor 115 are arranged.

The first rotor 111 is configured to rotate around a first rotation axis parallel to the predefined yaw axis AI, while the second rotor 112 is configured to rotate around a second rotation axis parallel both to the predefined yaw axis AI and to the first rotation axis of the first rotor 111.

The third rotor 113 is configured to rotate around a third rotation axis inclined with respect to a respective local vertical axis orthogonal to the given horizontal plane according to a first predefined inclination angle, while the fourth rotor 114 is configured to rotate around a fourth rotation axis inclined with respect to a respective local vertical axis orthogonal to the given horizontal plane according to a second predefined inclination angle, wherein the first predefined inclination angle and the second predefined inclination angle are congruent to each other and wherein the third rotation axis and the fourth rotation axis are inclined opposite to each other with respect to the respective local vertical axis.

The fifth rotor 115 is configured to rotate around a fifth rotation axis inclined with respect to a respective local vertical axis orthogonal to the given horizontal plane according to a third predefined inclination angle, while the sixth rotor 116 is configured to rotate around a sixth rotation axis inclined with respect to a respective local vertical axis orthogonal to the given horizontal plane according to a fourth predefined inclination angle, wherein the third predefined inclination angle and the fourth predefined inclination angle are congruent to each other and wherein the fifth rotation axis and the sixth rotation axis are inclined opposite to each other with respect to the respective local vertical axis.

The third rotation axis and the fifth rotation axis are inclined towards the first rotation axis, while the fourth rotation axis and the sixth rotation axis are inclined towards the second rotation axis.

Preferably, the first predefined inclination angle, the second predefined inclination angle, the third predefined inclination angle and the fourth predefined inclination angle are all congruent to one other, conveniently are all equal to 10°.

Preferably, the first rotor 111, the fifth rotor 115 and the sixth rotor 116, in use, rotate concurrently with each other (e.g., clockwise) around the first rotation axis, the fifth rotation axis and the sixth rotation axis, respectively, while the second rotor 112, the third rotor 113 and the fourth rotor 114, in use, rotate concurrently with each other and oppositely with respect to the first rotor 111, the fifth rotor 115 and the sixth rotor 116 (e.g., counterclockwise) around the second rotation axis, the third rotation axis and the fourth rotation axis, respectively.

The drone 110 also includes:
a support base 117 configured to function as landing gear and arranged at a lower part of said drone 110; and
an antenna 118 installed at an upper part of said drone 110.

The air unit 100 also comprises a front arm 120 and a back arm 130 which:
are mechanically and rigidly coupled to the drone 110 (especially, at an upper portion of the support base 117), each at a respective first coupling end; and
extend mainly along the predefined roll axis AR, on opposite sides with respect to the predefined yaw axis AI.

Furthermore, the air unit 100 also includes:
a group of batteries 140 to supply power to said air unit 100, wherein said group of batteries is attached under the back arm 130 at, or in any case near to, a respective second end opposite to the respective first end of said back arm 130;
a measuring instrument 150, e.g. an Ohmstik-type (typically forkshaped) measuring instrument, coupled to the front arm 120 (especially, to a respective second end opposite to the respective first end of said front arm 120) by means of an actuator system 160 which is mechanically coupled to said respective second end of the front arm 120 and is configured to move said measuring instrument 150 around the predefined roll axis AR, the predefined yaw axis AI and the predefined pitch axis AB;
a first group of sensors 170 installed on the support base 117 (especially at a lower front part of said support base 117), wherein said first group of sensors 170 comprises a LIDAR (an acronym for "Light Detection and Ranging" or "Laser Imaging Detection and Ranging") device 171 and a high-resolution optical stereo camera 172; and
a second group of sensors 180 coupled to the measuring instrument 150, wherein said second group of sensors 180 includes a first contact sensor 181 and a second contact sensor 182 in fork shape.

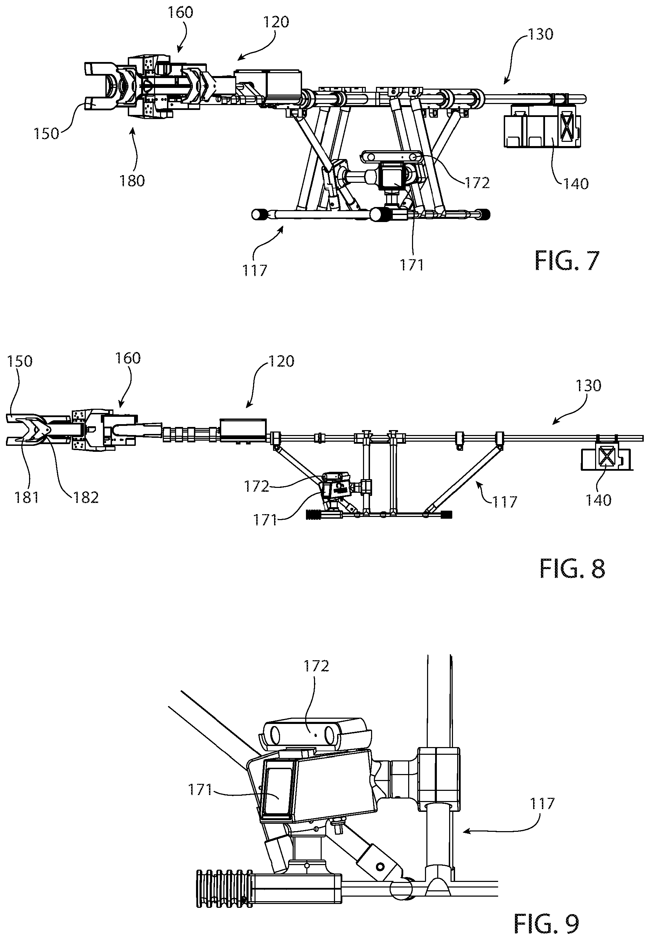

In this regard, for a better understanding of the present invention, FIGS. 7 and 8 provide a perspective view and a side view of the air unit 100, respectively, with parts being removed for a better illustrative clarity. Furthermore, FIG. 9 shows an enlarged view of the first group of sensors 170 comprising the LIDAR device 171 and the high-resolution optical stereo camera 172 installed above said LIDAR device 171.

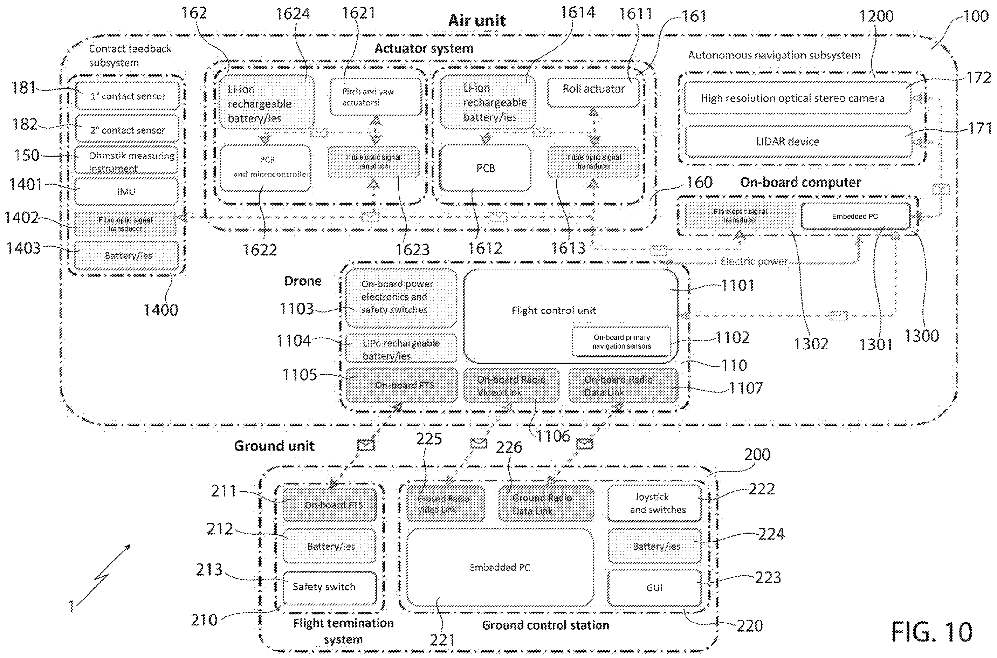

Furthermore, FIG. 10 schematically illustrates (in particular, by means of a functional block diagram) a high-level functional architecture of an UAS system (designated by 1 as a whole) according to a preferred, yet not limiting or restrictive, embodiment of the present invention.

In particular, the UAS system includes the air unit 100 and a ground unit 200.

More in detail, as illustrated in FIG. 10, the air unit 100 comprises, in terms of functional architecture, the drone 110, the actuator system 160, an autonomous navigation subsystem 1200, an on-board computer 1300 and a contact feedback subsystem 1400.

The actuator system 160 includes in turn:
a first actuator subsystem 161 comprising
   - a first actuator 1611 for moving the measuring instrument 150 around the predefined roll axis AR,
   - a first printed circuit board (PCB) 1612 for managing the first actuator subsystem 161,
   - a respective first fibre optic signal transducer 1613 connected to the first actuator 1611 and the first PCB 1612 and
   - one or more first Li-ion rechargeable batteries 1614 for supplying power to the first actuator subsystem 161; and
a second actuator subsystem 162 comprising
   - second actuators 1621 for moving the measuring instrument 150 around the predefined yaw axis AI and pitch axis AB,
   - a second PCB and a microcontroller 1622 for managing the second actuator subsystem 162,
   - a respective second fibre optic signal transducer 1623 connected to the second actuators 1621 and the second PCB 1622 and
   - one or more second Li-ion rechargeable batteries 1624 for supplying power to the second actuator subsystem 162.

Furthermore, as illustrated in FIG. 10, in terms of functional architecture, the drone 110 comprises:
a flight control unit 1101 provided with on-board primary navigation sensors 1102;
on-board power electronics and safety switches 1103;
one or more lithium polymer (LiPo) rechargeable batteries 1104 for supplying power to the drone 110;
an on-board flight termination system (FTS) 1105;
an on-board radio video link 1106 for transmitting to ground data provided by the on-board sensors, including those provided by the measuring instrument 150; and
an on-board radio data link 1107 for transmitting to ground telemetry and flight control data.

The autonomous navigation subsystem 1200 includes:
the LIDAR device 171 for detecting the distance from the element to be inspected, namely from the target to be measured (e.g., a conductor, a connector or an anchor set of HV aerial line); and
the high-resolution optical stereo camera 172 for recognizing the target and for identificating, orientating and holding contact with the target.

Furthermore, the on-board computer 1300 comprises an embedded-type PC 1301 and a respective fibre optic signal transducer 1302.

Lastly, the contact feedback subsystem 1400 comprises:
the first contact sensor 181 for detecting the contact with the target to be measured;
the second contact sensor 182 for detecting the contact with the target to be measured;
the measuring Ohmstik-type instrument 150;
an inertial measurement unit (IMU) 1401;
a respective fibre optic signal transducer 1402; and
one or more batteries 1403 for supplying power to the contact feedback subsystem 1400.

For the ground unit 200, this includes instead a flight termination system (FTS) 210 and a ground control station 220.

In particular, the flight termination system 210 comprises a ground FTS 211, one or more batteries 212 to supply power to the flight termination system 210 and a safety switch 213, whereas the ground control station 220 includes:
an embedded-type PC 221 for the overall mission management;
a joystick and switches 222 for flight control;
a graphical user interface (GUI) 223;
one or more batteries 224 for supplying power to the ground control station 220;
a ground radio video link 225 for payload video streams; and
a ground radio data link 226 for telemetry and flight control.

Hereinafter, a more extensive and detailed description of the UAS system 1 is provided.

### 1. Functional description of the UAS system 1

The UAS system 1 proves to be a quick, safe and autonomous solution for carrying out several specialized inspection and maintenance activities on HV towers (conveniently, up to 420 kV). In particular, the UAS system 1 allows the electric resistance measurement on conductors, connectors and anchor sets on operating HV lines in order for an operator to fully safely monitoring and carrying out small tasks to obtain the measure. Hereinafter, as an example of practical activity the UAS system 1 may carry out, some exemplifying mission procedures and methods performed for measuring the electric resistance by the Ohmstik measuring instrument 150 will be described in detail.

### 1.1. Functional description of an exemplifying mission for measuring the electric resistance

An electric resistance measurement mission may be conveniently performed in five macro-steps, as described below.

### 1) Mission planning, take-off and approach to the conductor, connector or anchor set

The first phase of the mission includes setting up the air unit 100 for performing the phase of take-off and subsequent approach to the HV aerial line element to be inspected.

By means of the ground control station 220 and the respective GUI 223, a pilot-in-command visualizes and controls all main parameters related to the air unit 100 and initializes the entire on-board instrumentation of said air unit 100 for initiating the mission (e.g., starting the Ohmstik measuring instrument 150 and the different parts of the actuator system 160). Following the positive control of the parameters of the air unit 100, the pilot proceeds sending the ignition command for the rotors 111, 112, 113, 114, 115, 116 and initiates the flight by approaching the element to be inspected. Before completing this phase, the pilot drives the air unit 100 near (e.g., at about 4 m) the selected line element, while checking that every subsystem intended for the autonomous navigation is active and ready to initiate the autonomous guidance procedure. Specifically, the pilot places the air unit 100 such that the LIDAR device 171 and the high-resolution optical stereo camera 172 are able to frame the target, so as to start the autonomous guidance/navigation procedure.

### 2) Target identification, recognition and selection

This phase includes the selection and the spatial geometric identification of the target to be measured for subsequently starting the autonomous navigation phase of approaching and contacting/coupling the measuring instrument 150 with the target.

By using the GUI 223, the pilot defines a delimitation area, or "bounding box", for the selection of the measuring target by drawing a rectangle in which the element to be inspected (e.g., anchor or connector or conductor) is enclosed in its entirety.

Once this process is completed, the pilot is able to check and validate the selection by displaying a "Labelled Point Cloud" representing the geometric pose of the measuring target corresponding to the selection bounding box initially defined.

### 3) Approach and contact/attachment of the Ohmstik measuring instrument 150 to the conductor, connector or anchor set to be inspected

In this phase the actuator system 160, the autonomous navigation subsystem 1200 comprising the LIDAR device 171 and the high-resolution optical stereo camera 172 and the contact feedback subsystem 1400 comprising the front contact sensors 181, 182 are involved in performing the phase of approaching and contacting/attaching the Ohmstik measuring instrument 150 and the conductor, connector or anchor set.

By means of the proximity sensors, the air unit 100 will be able to carry out the last phase of approaching and contacting the Ohmstik measuring instrument 150 and the HV aerial line and holding the position throughout the measurement. The actuator system 160, thanks to three degrees of freedom in moving the Ohmstik measuring instrument 150 (that is, around the predefined roll axis AR, yaw axis AI and pitch axis AB), is able to orientate said Ohmstik measuring instrument 150 in the appropriate position and to hold the same during the measuring operation, while avoiding the detachment as a result of any external disturbances to which the air unit 100 is subjected during the flight.

During this phase, the remote pilot is constantly enabled to regain control of the flight mission and intervene through the ground control station 220 or, in an emergency, with the flight termination system 210.

As for the final sequence of approach for contacting the Ohmstik measurement instrument 150 and the HV line target (e.g., the last 6/8 cm before contact), it is worth pointing out that, when the final phase of first contact of one of the front sensors 180 begins, the automatic controller of the actuator system 160 acts attempting to align/keep aligned the measuring instrument 150 and the conductor/connector, while the drone 110 moves slowly forward (centimeter by centimeter) until the front sensors 180 (that is, the first contact sensor 181 and the second contact sensor 182) reach the end limit and the measuring instrument 150 sends feedbacks related to the beginning of the electric resistance detection.

### 4) Carrying out of the measurement and departure

During this phase, the Ohmstik measuring instrument 150 sends to ground the data flow needed to carry out the required measurements on the conductor, connector or anchor set.

In this regard, it is worth pointing out that a dielectric insulation between the actuator system 160 and the drone 110 is provided. In particular, throughout the contact with the element to be measured (e.g., conductor, connector or anchor set) and throughout the carrying out of the measurements, the actuator system 160, and the electronics thereof, is at line potential, whereas the drone 110 remains insulated at undefined potential.

For this purpose, materials with high dielectric strength, such as polylactic acid (PLA) plastics, externally coated with epoxy resin for shielding purposes (especially all around the electronics, the motors and the batteries of the actuator system 160, such as to avoid induced currents that may damage the instruments), fibre optic connection and communication cables and fibre glass connecting and distancing rods between the actuator system 160 and the drone 110 are conveniently used.

Lastly, once the measurement is completed, the air unit 100 departs from the target, returns to the position where the automatic approaching mission has been started, also named as "safe position", returning to the manual flight configuration, in order to enable the pilot to reach the next approach point and possibly restart the sequence that has just been described.

### 5) Landing

The mission enters this phase at the end of the inspections to be carried out or upon reaching such a battery charge level that the return and landing of the air unit 100 in a predefined point initiate automatically.

### 2. Detailed description of the UAS system 1 for measuring the electric resistance

In the following sections, the subsystems illustrated in FIG. 10 and briefly described above are described in detail.

### 2.1 Air Unit 100

Below, the subsystems of the air unit 100 are described in detail.

### 2.1.1 Structure of the drone 110

Some preferred features of the structure of the drone 110 are listed below:
motor spacing 1,2 m;
main structure made of carbon fibre with acrylonitrile butadiene styrene (ABS) parts for realizing sandwiched structural components (e.g., carbon layers and ABS core);
non-structural components made of ABS;
six radial arms made of carbon fibre for supporting the rotors 111, 112, 113, 114, 115, 116, four of which are preferably rotated by 10° (i.e., the rotors 113, 114, 115, 116) in order to optimize the orientation control with respect to the yaw axis AI;
fixed landing gear (i.e., the support base 117) with support rod for the bracings of the payload (or end effector);
fibre glass support of the antenna 118.

### 2.1.2 Propulsion subsystem of the drone 110

Some preferred features of the propulsion subsystem of the drone 110 are listed below:
six brushless motors, dust- and water-proof (IP43) and overdesigned (maximum thrust 40 kg) to compensate for any failures or extraordinary loads (50 V);
six Field-Oriented-Control-type electronic rpm controllers in order to enhance the flight performance (50 V);
high-efficiency and low inertia 22" folding propellers made of carbon with wood core to provide maximum flight stability.

### 2.1.3 Flight control unit 1101 of the drone 110

Some preferred features of the flight control unit 1101 of the drone 110 are listed below:
miniaturized avionics with predefined flight firmware;
on-board primary navigation sensors 1102:
   - magnetometers;
   - gyroscopes;
   - accelerometers;
   - GPS RTK (an acronym for "Global Positioning System Real-Time Kinematic") and terrestrial antenna (estimated position error on the order of centimeters);
   - barometer;
the predefined flight firmware is set up for receiving and carrying out routines, software functions and custom messages necessary for the precision automatic navigation in the phases of approach, contact, slipping and position hold; this feature enables the autopilot to communicate with the on-board computer 1300 which, in turn, communicates with and manages all subsystems listed in the following section;
settable and changeable flight missions even when carrying out the automatic mission itself;
the predefined flight firmware allows to define specific waypoints where certain functions are carried out, e.g., "no flight" zones and restricted flight zones (geofencing);
possibility to plan different "Recovery Points" along the flight path for automatic emergency functions;
flight and piloting mode:
   - manual, with trim control;
   - manual, with position control;
   - automatic;
   - autonomous, for measuring the electric resistance of HV aerial lines.

### 2.1.4 On-board computer 1300 of the drone 110

In a preferred configuration of the drone 110, the embedded-type on-board computer 1103 designated for providing auxiliary navigation information to the flight control unit 1101 via a serial communication is provided.

Some preferred features of the on-board computer 1300 of the drone 110 are listed below:
CPU: 6 core ARM v8.2 64-bit, 6 MB L" + 4 MB L3;
GPU: 384 core Volta GPU with 48 Tensor Cores;
RAM: 8 GB 128-Bit LPDDR4x |59.7 GB/s;
storage space on eMMC 5.1 32 GB flash drive;
operating system Linux Ubuntu.

As illustrated in FIG. 10, in use, the on-board computer 1300 communicates with and manages the following subsystems and devices:
fibre optic connection to servomotors (i.e., actuators 1611, 1621) for moving the measuring instrument 150 for a right orientation in every flight phase and for position hold throughout the measurement;
optical subsystem (i.e., the LIDAR device 171 and the high-resolution optical stereo camera 172) for the identification of the target (insulator, conductor, anchor set or connector) to be displayed to the operator performing the subsequent selection;
the LIDAR device 171 allowing to acquire target orientation and positioning information for the phases of approaching, contacting and contact holding throughout the measurement;
the contact feedback subsystem 1400 being connected to the on-board computer 1300 through a non-conductive fibre optic wiring (conveniently, electromagnetic compatibility tested) and including two pressure/travel sensors 181, 182 placed near the ends of the measuring instrument 150 in order to ensure the contact between the measuring instrument 150 and the selected measuring target; even in this case, a specific software function executed on the on-board computer 1300 processes data from the sensors and make them publicly available to other functions adapted to interpret such information for navigating the drone 110 and moving the measuring instrument 150.

### 2.1.5 Safety, emergency and identification of the drone 110 subsystems

Some preferred features of the subsystems used for ensuring the safety of the drone 110, for managing emergencies and for identifying said drone 110, are listed below:
on-board FTS 1105 with independent radio signal, which is protected and dissimilar from the command and control data link (in accordance with ENAC (Italian Civil Aviation Authority) regulations in force and as described in detail in the following section);
ballistic parachute which may be activated by a pyrotechnic charge, either manually by a dedicated command from the ground FTS 211 or automatically by the on-board FTS 1105, in case of unusual attitude or flight firmware lock, in accordance with ENAC regulations;
navigation camera aiding the situational awareness;
data flow for controlling the on-board computer 1300 and the on-board sensors throughout the flight phases;
FDR - Flight Data Recorder on micro-SD card;
ability to fly under rainy conditions;
mission log for overhauling/maintenance;
actual flight time counter for scheduling routine maintenance operations;
power master switch on board the drone 110, essential for minimizing as much as possible the operators exposure to related risks and providing adequate safe working conditions;
illuminator and navigation lights for night flight in accordance with ENAC standards, which allow to detect the existence of defects on works;
provision of the "Return to home" function associated with the dedicated command allowing the drone 110 to return to the "Home Point", even in an emergency;
Fail-Safe procedures (which may all be disabled and modified by the pilot):
   - in case of GPS signal loss, the pilot is able to regain control on the drone 110 in manual mode by acting through the ground control station 220 and thereby proceeding the flight;
   - in case of data link loss or under run-down battery conditions (first threshold), the "Return to Home" automatically activates; the main parameters of this function may be defined by the operator in relation to the operation scenario;
   - in case of run-down battery (second threshold), an automatic emergency spot landing is envisaged;
automatic geofencing functionalities in order to safely delimit the operation area and avoid entering restricted areas;
secondary safety switch used before arming the motors.

### 2.1.5.1 Flight termination system

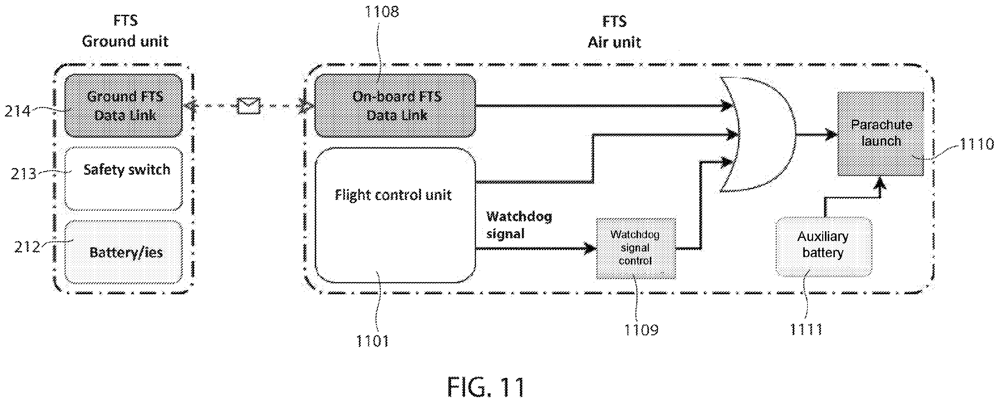

FIG. 11 schematically illustrates (in particular, by means of a functional block diagram) a high-level functional architecture of the Flight Termination System (FTS) in its entirety, that is comprising both the ground FTS 211 and the on-board FTS 1105, adapted to increase the safety level of the UAS system 1 as a whole in an emergency.

The modules of said entire flight termination system illustrated in FIG. 11 are described in detail below:
a) ground 214 and on-board 1108 FTS Data Link: radio communication modules between ground FTS 211 and on-board FTS 1105 which are dissimilar and independent with respect to the primary command and control system (433 MHz);
b) safety switch 213: manual activation switch for the flight termination system;
c) battery/ies 212: independent battery/ies for supplying the ground FTS 211 (e.g., AA 6 V 2000 mAh);
d) flight control unit 1101: flight management and control hardware and software representing the main element to select the activation of the flight termination system; this process is automatically triggered in case of exaggerated and uncontrolled flight envelopes or in case of software lock (both potentially generated by serious damages to the hardware of the entire system);
e) watchdog signal control 1109: watchdog timer signal produced by the flight control unit 1101 activating the flight termination system in case of lock;
f) parachute launch 1110: hardware logic receiving and interpreting one of the automatic or manual commands, including the watchdog, for flight termination and ignition of the ballistic charge for parachute ejection;
g) auxiliary battery 1111: the parachute launch system 1110 igniting the pyrotechnic charge is provided with an auxiliary supply system, which is independent from the main supply system, thereby ensuring the operation even in case of hardware breakdown.

### 2.1.6 Radio links

Some preferred features of the radio links the drone 110 is provided with are listed below:
high-performance on-board radio data link 1107 at 868 MHz frequency for transmitting the on-board telemetry and controlling the drone 110 from the ground at a single frequency;
on-board radio (digital) video link 1106 at 5.8 GHz frequency for the video stream from the sensors and for controlling the on-board computer 1300;
Bluetooth dongle for the communication between measuring instrument 150 and on-board computer 1300;
on-board FTS Data Link 1108 which is dissimilar and independent from the primary control system at 433 MHz frequency;
the drone 110 may also be conveniently provided with on-board LTE/5G technology, as needed.

### 2.1.7 Payload

In order to enable the specialized mission on HV aerial lines by means of the measuring Ohmstik-type instrument 150, a structure made of carbon and ABS supporting, in static equilibrium conditions with respect to the centre of gravity, the actuator system 160 and insulating rods in the front part and the group of batteries 140 with the on-board computer 1300 in the rear part, is conveniently realized. Such a structure may be conveniently constrained at the lower surface of the drone 110 through a sandwich backing plate made of carbon and ABS fixed through a plurality of screws arranged along the perimeter and the recesses themselves.

At the opposite end with respect to the group of batteries 140, a combination of three rods of insulating material stiffened by ABS supports, the actuator system 160 and the measuring instrument 150, may be conveniently fixed. At its end, said actuator system 160 proves to be the component ensuring and holding the contact of the measuring instrument 150 with the object to be inspected and unrestraining said measuring instrument 150 from any oscillations of the drone 110, namely of the air unit 100 (for example, due to the wind or varied disturbances) resulting in hindering the mission.

### 2.1.7.1 Ohmstik-type measuring device 150

In FIGS. 12 and 13, a perspective view and a top view of an end portion of the front arm 120 of the air unit 100 are provided, respectively.

As illustrated in FIGS. 12 and 13, the front arm 120 is provided, at the respective second end opposite to the respective first coupling end to the drone 110, with a set of three rods 121, 122, 123 made of insulating material, at the end of which the actuator system 160 is fixed, which is configured to rotate the measuring instrument 150 around the predefined roll axis AR, yaw axis AI and pitch axis AB by three servomotors (see actuators 1611, 1621 in FIG. 10) which are position-controlled by a predefined firmware being executed on a microcontroller existing on a specially designed hardware board (see PCB 1612 and PCB and microcontroller 1622 in FIG. 10).

In particular, the actuator system 160 preferably includes three main submodules:
1) a first submodule intended for the 270° rotation of the actuator system 160 around the predefined roll axis AR;
2) a second submodule intended for the 180° rotation of the actuator system 160 around the predefined yaw axis AI and pitch axis AB;
3) a third submodule intended for the attachment of the Ohmstik-type measuring instrument 150, in the presence of a motion transmission mechanism, also to the second group of sensors 180 coupled to said measuring instrument 150, that is to the first contact sensor 181 and the second contact sensor 182.

The actuator system 160 is conveniently realized with mechanical parts made of plastic material (ABS) for fixing and anchoring the rod, the Ohmstik measuring instrument 150 and every electronic and moving element installed on this part. In order to ensure the best insulation of the electronic components, without considering them as fractionating material, the following elements may be conveniently used:
highly electrically insulating epoxy resin covered/shielded structures, as defined in the following sections;
motion transmission joints made of insulating material;
door fixing screw made of plastic material.

Furthermore, for the same purpose, every submodule of the actuator system 160 may be conveniently provided with a management PCB having the following features:
independent supply for each single submodule;
components for powering up and recharging the independent batteries for each single submodule;
fibre optic digital communication devices for the several fibre optic submodules which are electrically independent from the on-board electronics controlling the flight of the drone 110. As shown in FIGS. 12 and 13, the Ohmstik measuring instrument 150 is preferably anchored to the actuator system 160 at two points: standard fixing support (the heavier area containing the measuring instrument 150) and separating rod of the second conductor. Such a configuration aids in moving and holding the position by reducing the torques involved and approaching as much as possible the position of the centre of gravity of the measuring instrument 150 to the most effective centre for applying the forces generated by the servomotors.

In the front part, near the "fork" of the Ohmstik measuring instrument 150, the first contact sensor 181 and the second contact sensor 182 are made by means of two forks connected to two pressure sensors providing the contact feedback employed in order to obtain information about the contact occurred and to hold the position throughout the measurement.

### 2.1.8 Autonomous navigation subsystem 1200

As described in the preceding sections, the autonomous navigation subsystem 1200 for navigating towards the target (conductor, insulator, anchor set or connector) uses as input the information provided by the high-resolution optical stereo camera 172 installed on a front part of the support base 117 of the drone 110 through a dedicated supporting structure.

Preferably, the high-resolution optical stereo camera 172 is configured to provide RGB images, depth images (relative to the distance between the centre of the optics and single pixels) and a point cloud (relative to the projection of single pixels into a three-dimensional space).

In particular, the point cloud provides the position of each pixel on predefined Cartesian axes x, y, z (corresponding to the predefined roll axis AR, pitch axis AB and yaw axis AI, respectively) with respect to the high-resolution optical stereo camera 172 providing the required geometries for defining the shape and spatial position of the line element subjected to the specialized maintenance activity to be executed.

The second component used for the creation of the point cloud and for the execution of the algorithms for carrying out the measurement is the LIDAR device 171, which makes use of a remote sensing technique permitting to determine the distance from an object or from a surface using a laser pulse according to a predefined method.

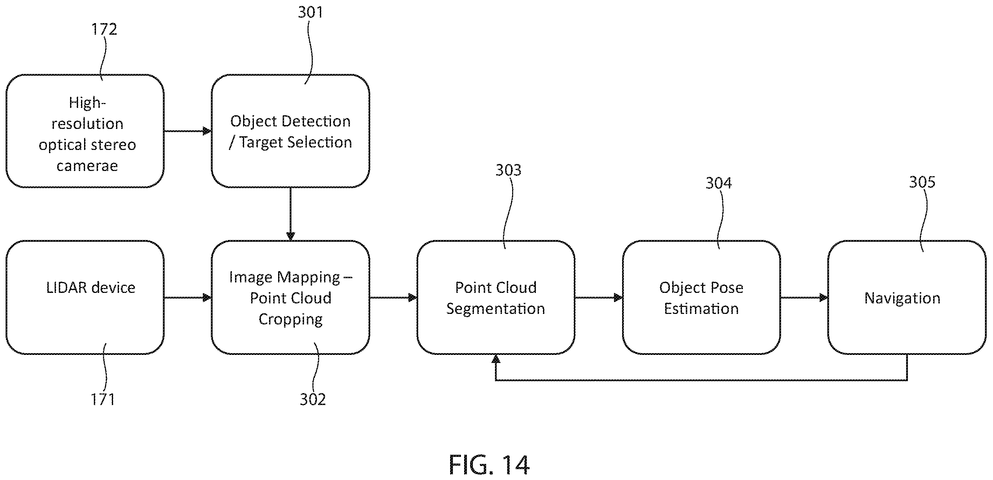

The whole algorithm for managing the navigation and carrying out the measurement in the automatic mode preferably includes five software modules, each intended for a different task, as briefly listed below and schematically illustrated in FIG. 14 by a respective flowchart:
1) Object Detection/Target Selection: recognition and selection of the line element to be inspected (block 301 in FIG. 14);
2) Image Mapping - Point Cloud Cropping: accurate selection of the point cloud of the element to be inspected (block 302 in FIG. 14);
3) Point Cloud Segmentation: spatial localisation of the line element to be inspected (block 303 in FIG. 14);
4) Object Pose Estimation: recognition of the position and orientation of the line element to be inspected (block 304 in FIG. 14);
5) Navigation: guidance of the drone 110, namely of the air unit 100, from the phase of approach up to the end of measurement by the aid of localisation and target information provided by the preceding software modules (block 305 in FIG. 14).

In the following sections, the different software modules listed above and schematically illustrated in FIG. 14 are described in more detail.

### 2.1.8.1 Object Detection

The first software module used by the algorithm (block 301 in FIG. 14) turns out to be the one intended for the identification of the target objects on which the measurement will be carried out: joints, anchors or conductors.

As explained above, the selection of the element to be inspected is performed by the ground operator leading the flight using the joystick 222 and the GUI 223. Thus, the pilot deals with:
capturing a target image by the high-resolution optical stereo camera 172;
next, drawing a rectangle in the image, inside which the element to be inspected is entirely contained; and
finally, selecting the central point of the object.

Once this process is completed, in case no specific errors or warnings are reported, the Object Detection software module (block 301 in FIG. 14) enables and starts the subsequent Image Mapping - Point Cloud Cropping module (block 302 in FIG. 14).

In order for the mission to be as much autonomous as possible, optionally the opportunity of being able to identify the objects by a neural network performing an accuracy trade-off between accuracy and efficiency of the algorithm may also be provided. The neural network should be conveniently accurate and at the same time "light", in order to be able to operate in real time on a compact processor mountable on board the air unit 100.

The neural network output is represented by rectangles containing the identified objects, similarly to the bounding box generated by the pilot in the phase described above.

### 2.1.8.2 Image Mapping - Point Cloud Cropping

Once the start of this phase is enabled, the Image Mapping - Point Cloud Cropping module (block 302 in FIG. 14) activates the detection of the front area through the LIDAR device 171 by synchronizing and calibrating the image from the high-resolution optical stereo camera 172, which was previously captured and manipulated with the point cloud being detected in this first step. Next, a point cloud cropping of the area related to the selection rectangle defined in the image used by the preceding software module (i.e., Object Detection - block 301 in FIG. 14) is carried out. Once this phase is completed, the GUI 223 displays the Labelled Point Cloud showing the discarded Point Cloud parts in yellow and the selection rectangle points in green and the part corresponding to the measuring target in red, which are used by the subsequent software module (i.e., Point Cloud Segmentation - block 303 in FIG. 14) in order to enable the navigation, approach, contacting and measuring phases. The pilot is able to check whether this module is properly executed by checking the Highlighted Point Cloud and to enable the subsequent Point Cloud Segmentation software module (block 303 in FIG. 14).

### 2.1.8.3 Point Cloud Segmentation

Once the pilot confirms the Segmented Point Cloud consistency, the next phase is started and the Point Cloud Segmentation software module (block 303 in FIG. 14) carries out the last part of Point Cloud filtering removing every unnecessary part, such as points belonging to other elements or to the background and to the noise generated during the LIDAR detection. This software module (i.e., Point Cloud Segmentation - block 303 in FIG. 14) is completed few seconds after its activation and, in case no error or warning messages are sent, the execution of the subsequent Object Pose Estimation software module (block 304 in FIG. 14) is enabled.

### 2.1.8.4 Object Pose Estimation

Once all segmentation steps are completed, the point cloud part resulting as input to the subsequent Object Pose Estimation software module (block 304 in FIG. 14) is sent. In this step, the point cloud is analyzed in terms of spatial geometry in order to identify the position and the orientation of the target by determining the main axes and the geometric centre of the object. Once this step is successfully completed, without generating error or warning messages, the actual automatic navigation phase of the drone 110 towards the measuring target (block 305 in FIG. 14) is enabled and started. In this regard, it is worth pointing out that throughout the phases described above (i.e., blocks 301, 302, 303, 304 in FIG. 14), the drone 110 flies stationary under hovering conditions until the execution of said Object Pose Estimation software module (block 304 in FIG. 14) has not been completed.

### 2.1.8.5 Navigation

Once the Navigation phase (block 305 in FIG. 14) is started, the drone 110 initiates to move along its approaching route towards the target, while keeping the heading angle constant until reaching a position, at which a second measurement of the target distance, position, orientation, etc., is carried out, in order to correct any errors of the first measurement carried out from farther away, without requiring any pilot consent or feedback. Thus, at that point, the software modules Point Cloud Segmentation (block 303 in FIG. 14) and Object Pose Estimation (block 304 in FIG. 14) updating the target position, distance, orientation, etc., and re-enabling the last phase of automatic navigation (block 305 in FIG. 14) are automatically reactivated. During this phase, the drone 110 performs all the calculations in less than 20 seconds and, in error case, automatically activates the return in the preceding position at which the measurement was started.

At the end of the second measurement, the Navigation module (block 305 in FIG. 14) orients the air unit 110 and the actuator system 160 in the right position to initiate the phase of approaching to the target, which terminates as soon as the first contact feedback from the front sensors 181, 182 is provided. At this point, the precision automatic navigation starts in relation to the last 3/5 cm before the measuring instrument 150 and the target to be measured contact. In this phase, the drone 110 makes use of information received from the contact sensors 181, 182 which provide the drone 110 with a position feedback allowing to move forward while reducing the gap between the measuring instrument 150 and the target. This approach process up to contact and position hold is also ensured by the actuator system control module 160 holding the measuring instrument 150 perfectly parallel to the object to be measured using the information from the contact sensors 181, 182. Upon reaching the desired position, the system holds the position for about one minute before carrying out the detachment and returning to the initial position, at which the automatic manoeuvre has been started. Throughout this phase, the drone 110 uses safety logics such as to allow the automatic abort and the return to the safety condition and position, such as:
when failing to reach the target, after the second measurement carried out near the line, a search process is activated, with a forward translation ending within 15 cm from its position in case no feedback is received from the front sensors 181, 182; in this phase and condition, the drone 110 keeps the insulation distances in order to return to the initial safety position;
when reaching an excessive offset between the two front contact sensors 181, 182, an abrupt abort of the mission is caused, in order to return to the initial safety position while keeping the insulation between the drone 110 and the HV aerial line;
an error in the search of the target, when the second measurement near the HV line is carried out, activates the return in the initial safety position while keeping the insulation between the drone 110 and the HV aerial line;
a possible departure of the drone 110 detected from the contact sensors 181, 182 when the measurement is carried out above a certain range activates the mission abort condition and the return to the initial safety position while keeping the insulation between the drone 110 and the HV aerial line.

### 2.1.9 Contact feedback subsystem 1400

As described above, the contact feedback subsystem 1400 together with the target includes two contact sensors 181, 182 positioned at the end of the front robotic arm 120 in order to provide the adhesion feedback until the contact of the entire measuring instrument 150 to carry out the measurement (i.e., of the two conductive ends of the "fork" for measuring the resistance).

The contact feedback subsystem 1400 preferably includes, in electronic terms, a PCB, two cr2032-type batteries, two fibre optic transmitters, a main switch, a connector for recharging the batteries, an Inertial Measurement Unit (IMU) and two positional transducers used in the different phases described above. Furthermore, a switch for activating/deactivating said contact feedback subsystem 1400 may also be conveniently provided. The contact sensors 181, 182 provide a feedback on the contact with the target to the on-board computer 1300 which makes use of it to better manage the autonomous navigation during the measuring phase.

### 2.1.10 Firmware and Flight dynamics of the system as a whole

In order to increase the flight capabilities of the drone 110, namely of the air unit 100, two main features allowing to obtain the measure are preferably implemented:
1) the integration of the new technology of rotation controllers of the brushless motors of the drone 110, so-called Field-Oriented-Control, allowing to sinusoidally control the motor rotation as compared to the conventional trapezoidal control; thus, this solution proves to be more efficient, accurate and precise, since it allows a better control of the propulsion subsystem and of the flight stability of the drone 110;
2) the orientation of four motors (i.e., the rotors 113, 114, 115 and 116) and the change of the flight controls of the drone 110 in order to generate a higher yaw torque and a better control on the bow of the drone 110 with the front arm 120.

### 2.1.11 High dielectric strength epoxy resin used for the actuator system 160

The actuator system 160 and the contact feedback subsystem 1400 contain electronic, therefore conductive, material (i.e., batteries, servomotors, sensors, PCB, etc.) which, being placed at the end of the front robotic arm 120, might be susceptible to the problems associated with the fractionating element and the poor dielectric strength.

In order to suppress or anyway to minimize the fractionating element made of conductive material and increase the dielectric strength near the line element, these modules are preferably inserted in one or more containers made of 3D printing plastic material coated with high dielectric strength epoxy resin (180 Kv/mm). The thickness of this resin is about 3/4 mm in order to give a high dielectric strength. These containers have further plugs and access holes allowing to recharge and have access to the parts accommodated therein.

### 2.1.12 Integration with the Ohmstik measuring instrument 150

The actuator system 160 described above is conveniently designed and realized so as to be able to accommodate, or in any case to be coupled to, said measuring instrument 150 (preferably, an Ohmstik Sensor Link Radio sensor). The measuring instrument 150 is conveniently configured for the radio communication towards the ground unit 200, in particular the ground control station 220, which shows measurement and operation information of the measuring instrument 150 on the GUI 223.

### 2.2 Ground Unit 200

Below, the subsystems of the ground unit 200 are described in detail.

### 2.2.1 Ground control station 220

Some preferred features of the ground control station 220 are listed below:
a tablet/PC (see the embedded PC 221 in FIG. 10) configured for:
   - displaying and managing the video streams from the on-board sensors;
   - managing and planning the automatic flight through the GUI 223 with the opportunity to define the waypoints and the related actions and to stop, change and restart the mission at any time;
   - exporting and managing the flight logs;
   - displaying telemetries and primary information of the drone 110, namely of the air unit 100;
a joystick 222 for piloting in manual mode and/or for controlling the position;
a ground radio video link 225 for transmitting video streams from the sensors to ground;
switches and potentiometers for the main functions, such as payload ignition and management;
local physical connectivity: USB, HDMI and RJ45;
local wireless connectivity: Wi-Fi and Bluetooth;
double Li-ion batteries (see battery/ies 224 in FIG. 10) connected in parallel to ensure continuous operability even in an emergency.

Some preferred features of the GUI 223 are further listed below:
accessible through authentication based on credentials (e.g., user name and password) required from each user;
completely proprietary software;
interface for cataloguing the detected measurement data (pre-processing step);
integration of specific functions for mission planning, as described above;
access to on-board logs;
saving and use of the telemetry logs;
reference to data related to the measurement that has been carried out;
management and display of on-line or custom maps loaded by the user;
remotisation capability through physical data networks or LTE/5G;
quick mission planning;
management and display of custom telemetries.

### 3. Final remarks on the invention

It is worth noticing some preferred features of the present invention.
1) Structure/frame configuration - As described above, the central frame is conveniently made of carbon fibre and polylactic acid (PLA) and distinctively features the orientation of the six thrust rotors 111, 112, 113, 114, 115, 116 with respect to the x-y plane of the drone 110 (i.e., the aforementioned given horizontal plane defined by the roll axis AR and the pitch axis AB). The rotors 111, 112, 113, 114, 115, 116 are arranged according to a star configuration around the predefined yaw axis AI and only four out of six rotors (i.e., the rotors 113, 114, 115, 116) are inclined by 10' around the motor directrix crossing the other motors directrices at the center. The rotors are inclined in order to create an actuation force component contributing to a greater yaw rotation capability around the z-axis of the drone 110 (i.e., the predefined yaw axis AI) while best compensating for the dynamic forces generated by the payload and the actuator system 160.
2) Landing gear configuration - The landing gear (that is, the support base 117) has been conveniently designed for:
   - ensuring a wide support base in order to prevent the drone 110, namely the air unit 100, from rolling over during the phases on the ground;
   - accommodating in an appropriate position (i.e., providing the necessary Field Of View (FOV) without blind spots caused by the actuator system 160 and the measuring instrument 150) the first group of sensors 170 (i.e., the LIDAR device 171 and the high-resolution optical stereo camera 172) employed in the phase of autonomous navigation towards the target;
   - supporting the bracings of payload and actuator system 160 in order to ensure a higher structural stiffness required for appropriately managing the dynamics and the natural oscillation frequencies of the overall structure of the system (i.e., of the air unit 100);
3) Payload - The payload includes:
   - the subsystem for supporting and connecting to the drone 110 (i.e., the front arm 120);
   - the actuator system 160;
   - the measuring instrument 150 (for example, of the Ohmstik-type); and - the contact feedback subsystem 1400.

In particular, the subsystem for supporting and connecting to the drone 110 includes every connection and static balancing member of the loads constituting the payload of the drone 110. It is preferably made of fibre glass, carbon and PLA and is centrally constrained to the drone 110 in order to be as near as possible to the centre of gravity of the drone 110 and to the application point of the kinematics of the payload loads (feature related to the manoeuvrability of the drone 110). Lastly, two constraint bracings mounted in a compressed state to the landing gear (that is, to the support base 117) are preferably present in order to stiffen and make the drone 110 and the whole transported payload (i.e., actuator system 160, measuring instrument 150, batteries 140, contact feedback subsystem 1400, front arm 120 and back arm 130) become a unitary body.

4) Actuator system 160 - The actuator system 160 is one the major parties involved in the solution consisting in correctly orienting the measuring instrument 150 for coupling with the target to be measured, but also for partially uncoupling the motion of the drone 110 from that of the measuring instrument 150 in order to hold the position and carry out the measurement despite the disturbed dynamics of the drone 110. In other words, the actuator system 160 is able to clear the positioning error of the measuring instrument 150 with respect to the target caused by disturbances of the drone 110 leading it to oscillate. The actuator system 160 preferably includes:
- three very small-sized servomotors (see actuators 1611, 1621 in FIG. 10) with very high torques (11 Nm - for robotic applications);
- a few custom PCBs (see PCB 1612 and PCB and microcontroller 1622 in FIG. 10) realized for supplying, recharging the batteries, controlling and communicating with the on-board computer 1300, the contact feedback subsystem 1400 and with one another through the fibre optic;
- batteries (see Li-ion rechargeable batteries 1614, 1624 in FIG. 10) sufficient to ensure an autonomy of at least 30 minutes and to absorb the required current peaks; and,
- at last, a whole lever structure for the movement and accommodation of the electronics and the Ohmstik and the dielectrical insulation entirely made of PLA and fibre glass.

5) Contact feedback subsystem 1400 - The contact feedback subsystem 1400 turns out to be another essential party of the solution allowing a centimeter-accurate estimation in order to perform the last phases of approach (e.g., the last 5 cm) and contact between the measuring instrument 150 and the HV aerial line target, but also to send inputs to the active control logic in the actuator system 160 allowing to move said actuator system 160 in order to suppress the coupling error between the measuring instrument 150 and the HV aerial line target throughout the flight. The contact feedback subsystem 1400 preferably includes:
- a battery (see battery/ies 1403 in FIG. 10);
- a PCB for supplying, recharging the batteries, communicating with the other parties listed above and managing two potentiometers having a 10 cm total travel range;
- two forks connected to the potentiometers (see contact sensors 181, 182) and provided with sliding guides mounted on the actuator system 160 allowing to enclose the conductor and transduce and transmit, thanks to a particular geometric configuration, the linear distance between the measuring instrument 150 and the HV aerial line target to the control logic of the automatic flight sequence.

6) Dielectric insulation between actuator system 160 and drone 110 - In order to keep the drone 110 at undefined potential separated from the HV aerial line, the subsystem for supporting and connecting preferably ensures an electrical insulation through a distancing of approximately 80/90 cm between the drone 110 and the HV aerial line element to be measured, as well as through an appropriate selection of the materials employed for realizing the same.

Conveniently, the employed insulating components are: fibre optic for the communication, fibre glass with high dielectric strength (i.e., higher than that of the air) for the structural support, the casing(s) and the PLA levers containing the electronics of the actuator system 160 and of the contact feedback subsystem 1400, entirely covered with at least 2 mm thick epoxy resin with very high dielectric strength (180/200 kV/mm).

7) Multi-Kalman Filter e multi-compasses for flight management in electromagnetic fields generated by HV lines - In order to ensure a correct estimation of the spatial orientation of the drone 110 required for the navigation, a multi-Kalman filter software module associated to compasses installed on board the drone 110 is preferably used. This software module is able to exclude all external disturbances occurring on the primary navigation sensors 1102 and is conveniently configured to manage the electromagnetic fields generated by HV aerial lines during the autonomous navigation of the drone 110.

8) Autonomous navigation algorithm and carrying out of the electric resistance measurement by the Ohmstik-type measuring instrument 150 - As described above, the software algorithm allows the autonomous navigation of the drone 110 up to the target and the carrying out of the electric resistance measurement until returning to the initial safety condition. In this algorithm, logics are also conveniently integrated, which allow to abort the mission in different fail conditions, such as in case the final coupling phase fails to initiate due to erroneous sensing or management of varied failure conditions (also in accordance with ENAC and EASA regulations in UAS field - e.g., management of contingency and emergency situations in the aerial operation).

9) Duty cycle and in-field use by the pilot - As described above, the employed duty cycle proves to fit and match appropriately with the UAS solution identified and developed, while also representing a conjunction between the aeronautical field in which UASs are used on NTD (acronym for "Non Destructive Testing") trials and the field of HV operations.

10) Interaction and cooperation among the different subsystems in order to create a fully cooperative complex system - The above described solution envisages a robust interaction and cooperation among all constitutive independent subsystems which become involved according to a different priority order depending on the navigation phase being performed in order to provide the electric resistance measurement of a HV aerial line, while maintaining the safety characteristics required for the flight of the drone 110 in such a peculiar environment.

The various novel features and the countless technical benefits of the present invention will become readily apparent to a technician skilled in the art.

In conclusion, it is worth noticing that, despite the above described invention refers in particular to well-defined actuation examples, it is not intended to be limited to such actuation examples, every variation, change, explanation or generalisation covered by the appended claims being encompassed by the scope thereof.

In this regard, it is worth highlighting again the fact that the UAS system according to the present invention may be advantageously used without needing any substantial changes to carry out any tasks, activities or operations (e.g., maintenance, repair, testing, etc.) on any target, structure or infrastructure disposed, or having parts positioned, at a certain height from the ground, especially also on targets/structures/infrastructures different from the HV aerial power lines explicitly referred to by the preceding description just for simplicity's sake and merely by way of example (but absolutely not by way of limitation or restriction).

For example, the UAS system according to the present invention may be advantageously used to carry out tasks, activities, operations, etc. (e.g., for maintenance, repair, testing, measurement, etc., purposes), even of complex, critical, hazardous, etc., type on varied targets/structures/infrastructures, such as:
antennas o antenna systems (e.g., of radar systems, radio relays, mobile phone systems, etc.) installed at a certain height from the ground (for example, on building roofs/bridges/viaducts, on top of ships, etc.);
electronic, mechanical, mechatronic, etc., systems installed at a certain altitude from the ground (for example, on aerial vehicles - e.g., electronic countermeasures systems);
varied systems/structures/infrastructures in inaccessible or hardly accessible zones/areas positioned at a certain height (e.g., funicular railway stations and apparatuses thereof);
   etc.

Furthermore, as the air unit, the UAS system according to the present invention might conveniently use a general multicopter drone with N rotors (N being an even integer such that N/2 is an odd integer) exhibiting geometric features similar to those of the drone 110 and of the six rotors 111, 112, 113, 114, 115, 116 of the latter.

## Claims

1. UAS system (1) comprising:
• an air unit (100) which includes a drone (110) and is designed to carry out one or more predefined tasks on a given target/structure/infrastructure arranged, or on a respective part of the latter positioned, at a given height; and
• a ground unit (200) designed to control the air unit (100);
wherein:
• the air unit (100) extends mainly along a predefined longitudinal roll axis (AR) which passes through, or near to, a centre of gravity of the drone (110) or of the air unit (100);
• the drone (110) comprises *N* rotors (111, 112, 113, 114, 115, 116), wherein N is an even integer such that *N*/*2* is an odd integer;
• the N rotors (111, 112, 113, 114, 115, 116) are arranged symmetrically, preferably according to a star configuration, around a predefined vertical yaw axis (AI) which passes through, or near to, said centre of gravity and is perpendicular to the predefined longitudinal roll axis (AR);
• two of the N rotors (111, 112) are configured to rotate around rotation axes parallel to the predefined vertical yaw axis (AI) and are arranged
- along a predefined transverse pitch axis (AB) which passes through, or near to, said centre of gravity and is perpendicular both to the predefined longitudinal roll axis (AR) and to the predefined vertical yaw axis (AI),
- symmetrically and on opposite sides with respect to both the predefined longitudinal roll axis (AR) and the predefined vertical yaw axis (AI);
• the other N-2 rotors (113, 114, 115, 116) are arranged in pairs
- on opposite sides with respect to the predefined longitudinal roll axis (AR),
- symmetrically and on opposite sides with respect to the predefined vertical yaw axis (AI),
- along a respective predefined axis which
- passes through, or near to, said centre of gravity,
- lies on a given horizontal plane defined by the predefined longitudinal roll axis (AR) and the predefined transverse pitch axis (AB) and
- is perpendicular to the predefined vertical yaw axis (AI),
whereby *N*/*2* rotors (111, 113, 115) are arranged on one and the same first side with respect to the predefined longitudinal roll axis (AR), while the other *N*/*2* rotors (112, 114, 116) are arranged on one and the same second side with respect to said predefined longitudinal roll axis (AR) opposite to said first side;
• said other *N*-2 rotors (113, 114, 115, 116) are configured, in pairs formed of rotors (113, 114; 115, 116) arranged on opposite sides with respect to the predefined longitudinal roll axis (AR), to rotate around two respective rotation axes, each inclined, according to a respective predefined inclination angle, with respect to a respective local vertical axis orthogonal to the given horizontal plane, wherein the two respective predefined inclination angles are congruent to each other and wherein the two respective rotation axes are inclined opposite to each other with respect to the respective local vertical axis;
• the air unit (100) also comprises a front arm (120) which
- is mechanically and rigidly coupled, at a respective first end, to the drone (110) at front part of the latter and
- extends mainly along the predefined longitudinal roll axis (AR);
• the air unit (100) also includes a payload device (150) configured to carry out said predefined task/s;
• the payload device (150) is coupled to the front arm (120) at a respective second end opposite to the respective first end of said front arm (120) by means of an actuator system (160) which is mechanically coupled to said respective second end of the front arm (120) and is configured to move said payload device (150) around the predefined longitudinal roll axis (AR), the predefined vertical yaw axis (AI) and the predefined transverse pitch axis (AB).

2. The UAS system according to claim 1, wherein *N=6* and wherein:
• a first rotor (111) and a second rotor (112) are arranged
- along the predefined transverse pitch axis (AB),
- symmetrically and on opposite sides with respect to both the predefined longitudinal roll axis (AR) and the predefined vertical yaw axis (AI);
• a third rotor (113) and a fourth rotor (114) are arranged
- on opposite sides with respect to the predefined longitudinal roll axis (AR),
- symmetrically and on opposite sides with respect to the predefined vertical yaw axis (AI),
- along a first predefined axis which
- passes through, or near to, said centre of gravity,
- lies on the given horizontal plane and
- is perpendicular to the predefined vertical yaw axis (AI);
• a fifth rotor (115) and a sixth rotor (116) are arranged
- on opposite sides with respect to the predefined longitudinal roll axis (AR),
- symmetrically and on opposite sides with respect to the predefined vertical yaw axis (AI),
- along a second predefined axis which
- passes through, or near to, said centre of gravity,
- lies on the given horizontal plane and
- is perpendicular both to the predefined vertical yaw axis (AI) and to the first predefined axis;
• the first rotor (111), the third rotor (113) and the fifth rotor (115) are arranged on the same side with respect to the predefined longitudinal roll axis (AR);
• the second rotor (112), the fourth rotor (114) and the sixth rotor (116) are arranged on the same side with respect to the predefined longitudinal roll axis (AR) opposite to the side where the first rotor (111), the third rotor (113) and the fifth rotor (115) are arranged;
• the first rotor (111) is configured to rotate around a first rotation axis parallel to the predefined vertical yaw axis (AI);
• the second rotor (112) is configured to rotate around a second rotation axis parallel both to the predefined vertical yaw axis (AI) and to the first rotation axis of the first rotor (111);
• the third rotor (113) is configured to rotate around a third rotation axis inclined with respect to a respective local vertical axis orthogonal to the given horizontal plane according to a first predefined inclination angle;
• the fourth rotor (114) is configured to rotate around a fourth rotation axis inclined with respect to a respective local vertical axis orthogonal to the given horizontal plane according to a second predefined inclination angle, wherein the first predefined inclination angle and the second predefined inclination angle are congruent to each other and wherein the third rotation axis and the fourth rotation axis are inclined opposite to each other with respect to the respective local vertical axis;
• the fifth rotor (115) is configured to rotate around a fifth rotation axis inclined with respect to a respective local vertical axis orthogonal to the given horizontal plane according to a third predefined inclination angle;
• the sixth rotor (116) is configured to rotate around a sixth rotation axis inclined with respect to a respective local vertical axis orthogonal to the given horizontal plane according to a fourth predefined inclination angle, wherein the third predefined inclination angle and the fourth predefined inclination angle are congruent to each other and wherein the fifth rotation axis and the sixth rotation axis are inclined opposite to each other with respect to the respective local vertical axis; • the third rotation axis and the fifth rotation axis are inclined towards the first rotation axis;
• the fourth rotation axis and the sixth rotation axis are inclined towards the second rotation axis;
• the first predefined inclination angle, the second predefined inclination angle, the third predefined inclination angle and the fourth predefined inclination angle are all congruent to one other and, conveniently, are all equal to 10°.

3. The UAS system according to claim 1 or 2, wherein the drone (110) also includes a support base (117) configured to function as landing gear and arranged at a lower part of said drone (110); and wherein the air unit (100) also comprises:
• a first group of sensors (170) which are installed on the support base (117), conveniently at a lower front part thereof, and are designed to provide an aid to autonomous navigation of the air unit (100); and
• a second group of sensors (180) coupled with the payload device (150) and configured to detect a contact of said payload device (150) with the given target/structure/infrastructure or the respective part thereof.

4. The UAS system according to claim 3, wherein the ground unit (200) is configured to allow an operator to remotely pilot the air unit (100) to reach a first predefined position in the vicinity of the given target/structure/infrastructure or the respective part thereof; and wherein the air unit (100) is configured to:
• fly autonomously from the first predefined position to the given target/structure/infrastructure or to the respective part thereof based on data/signals provided by the first group of sensors (170);
• detect a contact of the payload device (150) with said given target/structure/infrastructure or said respective part thereof based on data/signals provided by the second group of sensors (180); and
• operate the actuator system (160) to cause the payload device (150) to carry out the predefined task/s.

5. The UAS system according to claim 4, wherein the first group of sensors (170) comprises a LIDAR device (171) and a high-resolution optical stereo camera (172).

6. The UAS system according to claim 4 or 5, wherein the air unit (100) is configured to:
• carry out, at the first predefined position and based on the data/signals provided by the first group of sensors (170), a first measurement/estimation of position, distance and orientation of the given target/structure/infrastructure or of the respective part thereof;
• fly autonomously from the first predefined position to a second predefined position nearer to the given target/structure/infrastructure or to the respective part thereof based on the first measurement/estimation of position, distance and orientation;
• at said second predefined position, carry out, based on the data/signals provided by the first group of sensors (170), a second measurement/estimation of position, distance and orientation of the given target/structure/infrastructure or of the respective part thereof;
• fly autonomously from the second predefined position to the given target/structure/infrastructure or the respective part thereof based on the second measurement/estimation of position, distance and orientation.

7. The UAS system according to any one of the claims 4- 6, also comprising a flight termination system which includes an on-board flight termination subsystem (1105) installed on the air unit (100) and a ground flight termination subsystem (210) integrated in the ground unit (200), wherein:
• the ground flight termination subsystem (210) is configured to terminate, automatically or by operator command, the flight of the air unit (100) causing it to land if the occurrence of one or more predefined emergency conditions is detected; and
• the on-board flight termination subsystem (1105) is configured to automatically terminate the flight of the air unit (100) causing it to land if the occurrence of one or more predefined emergency conditions is detected.

8. The UAS system according to any one of the preceding claims, wherein the given target/structure/infrastructure is an aerial electric line, and wherein the payload device (150) is a device/system/instrument configured to carry out one or more activities, such as electric measurements, installations, repairs, maintenance operations, testing activities or the like, on one or more parts of said aerial electric line, such as conductors, connectors, anchor sets, insulators, supports, overhead ground wires, or the like.

9. Use of the UAS system as claimed in any one of the preceding claims to carry out one or more predefined tasks on a given target/structure/infrastructure arranged, or on a respective part of the latter positioned, at a given height.

10. Use of the UAS system as claimed in any one of the claims 1-8 to carry out one or more predefined tasks on an aerial electric line or on parts thereof.

## Patentansprüche

1. UAS-System (1), umfassend:
• eine Lufteinheit (100), die eine Drohne (110) einschließt und dazu ausgelegt ist, eine oder mehrere vordefinierte Aufgaben an einem gegebenen Ziel/einer gegebenen Struktur/Infrastruktur, die in einer gegebenen Höhe angeordnet ist, oder an einem jeweiligen Teil der letzteren, der in einer gegebenen Höhe positioniert ist, auszuführen; und
• eine Bodeneinheit (200), die dazu ausgelegt ist, die Lufteinheit (100) zu steuern; wobei:
• die Lufteinheit (100) sich hauptsächlich entlang einer vordefinierten Längsrollachse (AR) erstreckt, die durch einen oder in der Nähe eines Schwerpunkts der Drohne (110) oder der Lufteinheit (100) verläuft;
• die Drohne (110) *N* Rotoren (111, 112, 113, 114, 115, 116) umfasst, wobei *N* eine gerade ganze Zahl ist, sodass *N*/2 eine ungerade ganze Zahl ist;
• die *N* Rotoren (111, 112, 113, 114, 115, 116) symmetrisch, vorzugsweise gemäß einer Sternkonfiguration, um eine vordefinierte vertikale Gierachse (AI) angeordnet sind, die durch den besagten Schwerpunkt oder in dessen Nähe verläuft und senkrecht zur vordefinierten Längsrollachse (AR) steht;
• zwei der N Rotoren (111, 112) dazu konfiguriert sind, sich um Drehachsen zu drehen, die parallel zur vordefinierten vertikalen Gierachse (AI) sind, und angeordnet sind
• entlang einer vordefinierten Quer-Nickachse (AB), die durch den besagten Schwerpunkt oder in dessen Nähe verläuft und sowohl zur vordefinierten Längsrollachse (AR) als auch zur vordefinierten vertikalen Gierachse (AI) senkrecht steht,
• symmetrisch und auf gegenüberliegenden Seiten in Bezug auf sowohl die vordefinierte Längsrollachse (AR) als auch die vordefinierte vertikale Gierachse (AI); • die anderen N-2 Rotoren (113, 114, 115, 116) paarweise angeordnet sind
• auf gegenüberliegenden Seiten in Bezug auf die vordefinierte Längsrollachse (AR),
• symmetrisch und auf gegenüberliegenden Seiten in Bezug auf die vordefinierte vertikale Gierachse (AI),
• entlang einer jeweiligen vordefinierten Achse, die
o durch den besagten Schwerpunkt oder in dessen Nähe verläuft,
∘ auf einer gegebenen horizontalen Ebene liegt, die durch die vordefinierte Längsrollachse (AR) und die vordefinierte Quer-Nickachse (AB) definiert ist, und
∘ senkrecht zur vordefinierten vertikalen Gierachse (AI) steht, wodurch *N*/2 Rotoren (111, 113, 115) auf einer und derselben ersten Seite in Bezug auf die vordefinierte Längsrollachse (AR) angeordnet sind, während die anderen *N*/2 Rotoren (112, 114, 116) auf einer und derselben zweiten Seite in Bezug auf die besagte vordefinierte Längsrollachse (AR) gegenüber der besagten ersten Seite angeordnet sind;
• die besagten anderen *N*-2 Rotoren (113, 114, 115, 116) dazu konfiguriert sind, in Paaren, die aus auf gegenüberliegenden Seiten in Bezug auf die vordefinierte Längsrollachse (AR) angeordneten Rotoren (113, 114; 115, 116) gebildet sind, um zwei jeweilige Drehachsen zu rotieren, die jeweils gemäß einem jeweiligen vordefinierten Neigungswinkel in Bezug auf eine jeweilige lokale vertikale Achse, die zur gegebenen horizontalen Ebene orthogonal ist, geneigt sind, wobei die beiden jeweiligen vordefinierten Neigungswinkel zueinander kongruent sind und wobei die beiden jeweiligen Drehachsen in Bezug auf die jeweilige lokale vertikale Achse entgegengesetzt zueinander geneigt sind;
• die Lufteinheit (100) ebenfalls einen vorderen Arm (120) umfasst, der
• an einem jeweiligen ersten Ende mechanisch und starr mit der Drohne (110) an deren vorderem Teil gekoppelt ist und
• sich hauptsächlich entlang der vordefinierten Längsrollachse (AR) erstreckt;
• die Lufteinheit (100) ebenfalls eine Nutzlastvorrichtung (150) einschließt, die dazu konfiguriert ist, die besagte(n) vordefinierte(n) Aufgabe(n) auszuführen;
• die Nutzlastvorrichtung (150) mit dem vorderen Arm (120) an einem jeweiligen zweiten Ende gegenüber dem jeweiligen ersten Ende des besagten vorderen Arms (120) mittels eines Aktorsystems (160) gekoppelt ist, das mechanisch mit dem besagten jeweiligen zweiten Ende des vorderen Arms (120) gekoppelt ist und dazu konfiguriert ist, die besagte Nutzlastvorrichtung (150) um die vordefinierte Längsrollachse (AR), die vordefinierte vertikale Gierachse (AI) und die vordefinierte Quer-Nickachse (AB) zu bewegen.

2. Das UAS-System nach Anspruch 1, wobei *N*=6 und wobei:
• ein erster Rotor (111) und ein zweiter Rotor (112) angeordnet sind
• entlang der vordefinierten Quer-Nickachse (AB),
• symmetrisch und auf gegenüberliegenden Seiten in Bezug auf sowohl die vordefinierte Längsrollachse (AR) als auch die vordefinierte vertikale Gierachse (AI);
• ein dritter Rotor (113) und ein vierter Rotor (114) angeordnet sind
• auf gegenüberliegenden Seiten in Bezug auf die vordefinierte Längsrollachse (AR),
• symmetrisch und auf gegenüberliegenden Seiten in Bezug auf die vordefinierte vertikale Gierachse (AI),
• entlang einer ersten vordefinierten Achse, die
∘ durch den besagten Schwerpunkt oder in dessen Nähe verläuft,
∘ auf der gegebenen horizontalen Ebene liegt und
∘ senkrecht zur vordefinierten vertikalen Gierachse (AI) steht;
• ein fünfter Rotor (115) und ein sechster Rotor (116) angeordnet sind
• auf gegenüberliegenden Seiten in Bezug auf die vordefinierte Längsrollachse (AR),
• symmetrisch und auf gegenüberliegenden Seiten in Bezug auf die vordefinierte vertikale Gierachse (AI),
• entlang einer zweiten vordefinierten Achse, die
∘ durch den besagten Schwerpunkt oder in dessen Nähe verläuft,
∘ auf der gegebenen horizontalen Ebene liegt und
∘ sowohl zur vordefinierten vertikalen Gierachse (AI) als auch zur ersten vordefinierten Achse senkrecht steht;
• der erste Rotor (111), der dritte Rotor (113) und der fünfte Rotor (115) auf derselben Seite in Bezug auf die vordefinierte Längsrollachse (AR) angeordnet sind;
• der zweite Rotor (112), der vierte Rotor (114) und der sechste Rotor (116) auf derselben Seite in Bezug auf die vordefinierte Längsrollachse (AR) gegenüber der Seite angeordnet sind, auf der der erste Rotor (111), der dritte Rotor (113) und der fünfte Rotor (115) angeordnet sind;
• der erste Rotor (111) dazu konfiguriert ist, um eine erste Drehachse zu rotieren, die parallel zur vordefinierten vertikalen Gierachse (AI) ist;
• der zweite Rotor (112) dazu konfiguriert ist, um eine zweite Drehachse zu rotieren, die sowohl zur vordefinierten vertikalen Gierachse (AI) als auch zur ersten Drehachse des ersten Rotors (111) parallel ist;
• der dritte Rotor (113) dazu konfiguriert ist, um eine dritte Drehachse zu rotieren, die in Bezug auf einejeweilige lokale vertikale Achse, die zur gegebenen horizontalen Ebene orthogonal ist, gemäß einem ersten vordefinierten Neigungswinkel geneigt ist;
• der vierte Rotor (114) dazu konfiguriert ist, um eine vierte Drehachse zu rotieren, die in Bezug auf eine jeweilige lokale vertikale Achse, die zur gegebenen horizontalen Ebene orthogonal ist, gemäß einem zweiten vordefinierten Neigungswinkel geneigt ist, wobei der erste vordefinierte Neigungswinkel und der zweite vordefinierte Neigungswinkel zueinander kongruent sind und wobei die dritte Drehachse und die vierte Drehachse in Bezug auf die jeweilige lokale vertikale Achse entgegengesetzt zueinander geneigt sind;
• der fünfte Rotor (115) dazu konfiguriert ist, um eine fünfte Drehachse zu rotieren, die in Bezug auf eine jeweilige lokale vertikale Achse, die zur gegebenen horizontalen Ebene orthogonal ist, gemäß einem dritten vordefinierten Neigungswinkel geneigt ist;
• der sechste Rotor (116) dazu konfiguriert ist, um eine sechste Drehachse zu rotieren, die in Bezug auf eine jeweilige lokale vertikale Achse, die zur gegebenen horizontalen Ebene orthogonal ist, gemäß einem vierten vordefinierten Neigungswinkel geneigt ist, wobei der dritte vordefinierte Neigungswinkel und der vierte vordefinierte Neigungswinkel zueinander kongruent sind und wobei die fünfte Drehachse und die sechste Drehachse in Bezug auf die jeweilige lokale vertikale Achse entgegengesetzt zueinander geneigt sind;
• die dritte Drehachse und die fünfte Drehachse zur ersten Drehachse hin geneigt sind;
• die vierte Drehachse und die sechste Drehachse zur zweiten Drehachse hin geneigt sind;
• der erste vordefinierte Neigungswinkel, der zweite vordefinierte Neigungswinkel, der dritte vordefinierte Neigungswinkel und der vierte vordefinierte Neigungswinkel alle zueinander kongruent sind und praktischerweise alle gleich 10° sind.

3. Das UAS-System nach Anspruch 1 oder 2, wobei die Drohne (110) ebenfalls eine Trägerbasis (117) einschließt, die dazu konfiguriert ist, als Landegestell zu fungieren, und an einem unteren Teil der besagten Drohne (110) angeordnet ist; und wobei die Lufteinheit (100) ebenfalls umfasst:
• eine erste Gruppe von Sensoren (170), die auf der Trägerbasis (117), praktischerweise an einem unteren vorderen Teil davon, installiert sind und dazu ausgelegt sind, eine Hilfe für die autonome Navigation der Lufteinheit (100) bereitzustellen; und
• eine zweite Gruppe von Sensoren (180), die mit der Nutzlastvorrichtung (150) gekoppelt und dazu konfiguriert sind, einen Kontakt der besagten Nutzlastvorrichtung (150) mit dem gegebenen Ziel/der gegebenen Struktur/Infrastruktur oder dem jeweiligen Teil davon zu detektieren.

4. Das UAS-System nach Anspruch 3, wobei die Bodeneinheit (200) dazu konfiguriert ist, einem Bediener zu ermöglichen, die Lufteinheit (100) fernzusteuern, um eine erste vordefinierte Position in der Nähe des gegebenen Ziels/der gegebenen Struktur/Infrastruktur oder des jeweiligen Teils davon zu erreichen; und wobei die Lufteinheit (100) dazu konfiguriert ist:
• autonom von der ersten vordefinierten Position zu dem gegebenen Ziel/der gegebenen Struktur/Infrastruktur oder zu dem jeweiligen Teil davon zu fliegen, basierend auf Daten/Signalen, die von der ersten Gruppe von Sensoren (170) bereitgestellt werden;
• einen Kontakt der Nutzlastvorrichtung (150) mit dem besagten gegebenen Ziel/der besagten gegebenen Struktur/Infrastruktur oder dem besagten jeweiligen Teil davon zu detektieren, basierend auf Daten/Signalen, die von der zweiten Gruppe von Sensoren (180) bereitgestellt werden; und
• das Aktorsystem (160) zu betätigen, um zu bewirken, dass die Nutzlastvorrichtung (150) die vordefinierte(n) Aufgabe(n) ausführt.

5. Das UAS-System nach Anspruch 4, wobei die erste Gruppe von Sensoren (170) eine LIDAR-Vorrichtung (171) und eine hochauflösende optische Stereokamera (172) umfasst.

6. Das UAS-System nach Anspruch 4 oder 5, wobei die Lufteinheit (100) dazu konfiguriert ist:
• an der ersten vordefinierten Position und basierend auf den von der ersten Gruppe von Sensoren (170) bereitgestellten Daten/Signalen eine erste Messung/Schätzung der Position, des Abstands und der Ausrichtung des gegebenen Ziels/der gegebenen Struktur/Infrastruktur oder des jeweiligen Teils davon durchzuführen;
• autonom von der ersten vordefinierten Position zu einer zweiten vordefinierten Position, die näher am gegebenen Ziel/an der gegebenen Struktur/Infrastruktur oder am jeweiligen Teil davon liegt, zu fliegen, basierend auf der ersten Messung/Schätzung der Position, des Abstands und der Ausrichtung;
• an der besagten zweiten vordefinierten Position, basierend auf den von der ersten Gruppe von Sensoren (170) bereitgestellten Daten/Signalen, eine zweite Messung/Schätzung der Position, des Abstands und der Ausrichtung des gegebenen Ziels/der gegebenen Struktur/Infrastruktur oder des jeweiligen Teils davon durchzuführen;
• autonom von der zweiten vordefinierten Position zu dem gegebenen Ziel/der gegebenen Struktur/Infrastruktur oder dem jeweiligen Teil davon zu fliegen, basierend auf der zweiten Messung/Schätzung der Position, des Abstands und der Ausrichtung.

7. Das UAS-System nach einem der Ansprüche 4-6, das ebenfalls ein Flugabbruchsystem umfasst, welches ein auf der Lufteinheit (100) installiertes bordseitiges Flugabbruch-Subsystem (1105) und ein in die Bodeneinheit (200) integriertes bodenseitiges Flugabbruch-Subsystem (210) einschließt, wobei:
• das bodenseitige Flugabbruch-Subsystem (210) dazu konfiguriert ist, den Flug der Lufteinheit (100) automatisch oder auf Bedienerbefehl hin zu beenden, indem es sie zur Landung veranlasst, wenn das Auftreten einer oder mehrerer vordefinierter Notfallbedingungen detektiert wird; und
• das bordseitige Flugabbruch-Subsystem (1105) dazu konfiguriert ist, den Flug der Lufteinheit (100) automatisch zu beenden, indem es sie zur Landung veranlasst, wenn das Auftreten einer oder mehrerer vordefinierter Notfallbedingungen detektiert wird.

8. Das UAS-System nach einem der vorhergehenden Ansprüche, wobei das gegebene Ziel/die gegebene Struktur/Infrastruktur eine elektrische Freileitung ist, und wobei die Nutzlastvorrichtung (150) eine Vorrichtung/ein System/ein Instrument ist, das dazu konfiguriert ist, eine oder mehrere Tätigkeiten, wie elektrische Messungen, Installationen, Reparaturen, Wartungsoperationen, Testtätigkeiten oder dergleichen, an einem oder mehreren Teilen der besagten elektrischen Freileitung, wie Leiter, Verbinder, Abspannketten, Isolatoren, Stützen, Erdseile oder dergleichen, auszuführen.

9. Verwendung des UAS-Systems nach einem der vorhergehenden Ansprüche zur Ausführung einer oder mehrerer vordefinierter Aufgaben an einem gegebenen Ziel/einer gegebenen Struktur/Infrastruktur, die in einer gegebenen Höhe angeordnet ist, oder an einem jeweiligen Teil der letzteren, der in einer gegebenen Höhe positioniert ist.

10. Verwendung des UAS-Systems nach einem der Ansprüche 1-8 zur Ausführung einer oder mehrerer vordefinierter Aufgaben an einer elektrischen Freileitung oder an Teilen davon.

## Revendications

1. Système UAS (1) comprenant :
• une unité aérienne (100) qui inclut un drone (110) et est conçue pour réaliser une ou plusieurs tâches prédéfinies sur une cible/structure/infrastructure donnée agencée, ou sur une partie respective de cette dernière positionnée, à une hauteur donnée ; et
• une unité au sol (200) conçue pour commander l'unité aérienne (100) ; dans lequel :
• ladite unité aérienne (100) s'étend principalement le long d'un axe de roulis longitudinal prédéfini (AR) qui passe par, ou à proximité de, un centre de gravité du drone (110) ou de l'unité aérienne (100) ;
• ledit drone (110) comprend *N* rotors (111, 112, 113, 114, 115, 116), où *N* est un entier pair tel que *N*/2 est un entier impair ;
• lesdits *N* rotors (111, 112, 113, 114, 115, 116) sont agencés symétriquement, de préférence selon une configuration en étoile, autour d'un axe de lacet vertical prédéfini (AI) qui passe par, ou à proximité de, ledit centre de gravité et est perpendiculaire à l'axe de roulis longitudinal prédéfini (AR) ;
• deux desdits *N* rotors (111, 112) sont configurés pour tourner autour d'axes de rotation parallèles à l'axe de lacet vertical prédéfini (AI) et sont agencés
• le long d'un axe de tangage transversal prédéfini (AB) qui passe par, ou à proximité de, ledit centre de gravité et est perpendiculaire à la fois à l'axe de roulis longitudinal prédéfini (AR) et à l'axe de lacet vertical prédéfini (AI),
• symétriquement et sur des côtés opposés par rapport à la fois à l'axe de roulis longitudinal prédéfini (AR) et à l'axe de lacet vertical prédéfini (AI) ;
• les *N*-2 autres rotors (113, 114, 115, 116) sont agencés par paires
• sur des côtés opposés par rapport à l'axe de roulis longitudinal prédéfini (AR),
• symétriquement et sur des côtés opposés par rapport à l'axe de lacet vertical prédéfini (AI),
• le long d'un axe prédéfini respectif qui
∘ passe par, ou à proximité de, ledit centre de gravité,
∘ se trouve sur un plan horizontal donné défini par l'axe de roulis longitudinal prédéfini (AR) et l'axe de tangage transversal prédéfini (AB) et
∘ est perpendiculaire à l'axe de lacet vertical prédéfini (AI), moyennant quoi *N*/2 rotors (111, 113, 115) sont agencés sur un même premier côté par rapport à l'axe de roulis longitudinal prédéfini (AR), tandis que les autres *N*/2 rotors (112, 114, 116) sont agencés sur un même second côté par rapport audit axe de roulis longitudinal prédéfini (AR) opposé audit premier côté ;
• lesdits *N*-2 autres rotors (113, 114, 115, 116) sont configurés, en paires formées de rotors (113, 114 ; 115, 116) agencés sur des côtés opposés par rapport à l'axe de roulis longitudinal prédéfini (AR), pour tourner autour de deux axes de rotation respectifs, chacun incliné, selon un angle d'inclinaison prédéfini respectif, par rapport à un axe vertical local respectif orthogonal audit plan horizontal donné, dans lequel les deux angles d'inclinaison prédéfinis respectifs sont congruents l'un à l'autre et dans lequel les deux axes de rotation respectifs sont inclinés de manière opposée l'un à l'autre par rapport à l'axe vertical local respectif ;
• ladite unité aérienne (100) comprend également un bras avant (120) qui
• est couplé mécaniquement et rigidement, à une première extrémité respective, au drone (110) au niveau de la partie avant de ce dernier et
• s'étend principalement le long de l'axe de roulis longitudinal prédéfini (AR)
• ladite unité aérienne (100) inclut également un dispositif de charge utile (150) configuré pour réaliser ladite ou lesdites tâches prédéfinies ;
• ledit dispositif de charge utile (150) est couplé au bras avant (120) à une seconde extrémité respective opposée à la première extrémité respective dudit bras avant (120) au moyen d'un système d'actionneur (160) qui est couplé mécaniquement à ladite seconde extrémité respective du bras avant (120) et est configuré pour déplacer ledit dispositif de charge utile (150) autour de l'axe de roulis longitudinal prédéfini (AR), de l'axe de lacet vertical prédéfini (AI) et de l'axe de tangage transversal prédéfini (AB).

2. Le système UAS selon la revendication 1, dans lequel *N*=6 et dans lequel :
• un premier rotor (111) et un deuxième rotor (112) sont agencés
• le long de l'axe de tangage transversal prédéfini (AB),
• symétriquement et sur des côtés opposés par rapport à la fois à l'axe de roulis longitudinal prédéfini (AR) et à l'axe de lacet vertical prédéfini (AI) ;
• un troisième rotor (113) et un quatrième rotor (114) sont agencés
• sur des côtés opposés par rapport à l'axe de roulis longitudinal prédéfini (AR),
• symétriquement et sur des côtés opposés par rapport à l'axe de lacet vertical prédéfini (AI),
• le long d'un premier axe prédéfini qui
∘ passe par, ou à proximité de, ledit centre de gravité,
∘ se trouve sur le plan horizontal donné et
∘ est perpendiculaire à l'axe de lacet vertical prédéfini (AI) ;
• un cinquième rotor (115) et un sixième rotor (116) sont agencés
• sur des côtés opposés par rapport à l'axe de roulis longitudinal prédéfini (AR),
• symétriquement et sur des côtés opposés par rapport à l'axe de lacet vertical prédéfini (AI),
• le long d'un second axe prédéfini qui
∘ passe par, ou à proximité de, ledit centre de gravité,
∘ se trouve sur le plan horizontal donné et
∘ est perpendiculaire à la fois à l'axe de lacet vertical prédéfini (AI) et au premier axe prédéfini ;
• le premier rotor (111), le troisième rotor (113) et le cinquième rotor (115) sont agencés sur le même côté par rapport à l'axe de roulis longitudinal prédéfini (AR) ;
• le deuxième rotor (112), le quatrième rotor (114) et le sixième rotor (116) sont agencés sur le même côté par rapport à l'axe de roulis longitudinal prédéfini (AR) opposé au côté où le premier rotor (111), le troisième rotor (113) et le cinquième rotor (115) sont agencés ;
• le premier rotor (111) est configuré pour tourner autour d'un premier axe de rotation parallèle à l'axe de lacet vertical prédéfini (AI) ;
• le deuxième rotor (112) est configuré pour tourner autour d'un deuxième axe de rotation parallèle à la fois à l'axe de lacet vertical prédéfini (AI) et au premier axe de rotation du premier rotor (111) ;
• le troisième rotor (113) est configuré pour tourner autour d'un troisième axe de rotation incliné par rapport à un axe vertical local respectif orthogonal au plan horizontal donné selon un premier angle d'inclinaison prédéfini ;
• le quatrième rotor (114) est configuré pour tourner autour d'un quatrième axe de rotation incliné par rapport à un axe vertical local respectif orthogonal au plan horizontal donné selon un deuxième angle d'inclinaison prédéfini, dans lequel le premier angle d'inclinaison prédéfini et le deuxième angle d'inclinaison prédéfini sont congruents l'un à l'autre et dans lequel le troisième axe de rotation et le quatrième axe de rotation sont inclinés de manière opposée l'un à l'autre par rapport à l'axe vertical local respectif ;
• le cinquième rotor (115) est configuré pour tourner autour d'un cinquième axe de rotation incliné par rapport à un axe vertical local respectif orthogonal au plan horizontal donné selon un troisième angle d'inclinaison prédéfini ;
• le sixième rotor (116) est configuré pour tourner autour d'un sixième axe de rotation incliné par rapport à un axe vertical local respectif orthogonal au plan horizontal donné selon un quatrième angle d'inclinaison prédéfini, dans lequel le troisième angle d'inclinaison prédéfini et le quatrième angle d'inclinaison prédéfini sont congruents l'un à l'autre et dans lequel le cinquième axe de rotation et le sixième axe de rotation sont inclinés de manière opposée l'un à l'autre par rapport à l'axe vertical local respectif ;
• le troisième axe de rotation et le cinquième axe de rotation sont inclinés vers le premier axe de rotation ;
• le quatrième axe de rotation et le sixième axe de rotation sont inclinés vers le deuxième axe de rotation ;
• le premier angle d'inclinaison prédéfini, le deuxième angle d'inclinaison prédéfini, le troisième angle d'inclinaison prédéfini et le quatrième angle d'inclinaison prédéfini sont tous congruents les uns aux autres et, de manière pratique, sont tous égaux à 10°.

3. Le système UAS selon la revendication 1 ou 2, dans lequel le drone (110) inclut également une base de support (117) configurée pour fonctionner comme train d'atterrissage et agencée à une partie inférieure dudit drone (110) ; et dans lequel l'unité aérienne (100) comprend également :
• un premier groupe de capteurs (170) qui sont installés sur la base de support (117), de manière pratique sur une partie avant inférieure de celle-ci, et sont conçus pour fournir une aide à la navigation autonome de l'unité aérienne (100) ; et
• un second groupe de capteurs (180) couplé au dispositif de charge utile (150) et configuré pour détecter un contact dudit dispositif de charge utile (150) avec la cible/structure/infrastructure donnée ou la partie respective de celle-ci.

4. Le système UAS selon la revendication 3, dans lequel l'unité au sol (200) est configurée pour permettre à un opérateur de piloter à distance l'unité aérienne (100) pour atteindre une première position prédéfinie à proximité de la cible/structure/infrastructure donnée ou de la partie respective de celle-ci ; et dans lequel l'unité aérienne (100) est configurée pour :
• voler de manière autonome depuis la première position prédéfinie jusqu'à la cible/structure/infrastructure donnée ou jusqu'à la partie respective de celle-ci sur la base de données/signaux fournis par le premier groupe de capteurs (170) ;
• détecter un contact du dispositif de charge utile (150) avec ladite cible/structure/infrastructure donnée ou ladite partie respective de celle-ci sur la base de données/signaux fournis par le second groupe de capteurs (180) ; et
• actionner le système d'actionneur (160) pour amener le dispositif de charge utile (150) à réaliser la ou lesdites tâches prédéfinies.

5. Le système UAS selon la revendication 4, dans lequel le premier groupe de capteurs (170) comprend un dispositif LIDAR (171) et une caméra stéréo optique à haute résolution (172).

6. Le système UAS selon la revendication 4 ou 5, dans lequel l'unité aérienne (100) est configurée pour :
• effectuer, à la première position prédéfinie et sur la base des données/signaux fournis par le premier groupe de capteurs (170), une première mesure/estimation de la position, de la distance et de l'orientation de la cible/structure/infrastructure donnée ou de la partie respective de celle-ci ;
• voler de manière autonome depuis la première position prédéfinie jusqu'à une seconde position prédéfinie plus proche de la cible/structure/infrastructure donnée ou de la partie respective de celle-ci sur la base de la première mesure/estimation de la position, de la distance et de l'orientation ;
• à ladite seconde position prédéfinie, effectuer, sur la base des données/signaux fournis par le premier groupe de capteurs (170), une seconde mesure/estimation de la position, de la distance et de l'orientation de la cible/structure/infrastructure donnée ou de la partie respective de celle-ci ;
• voler de manière autonome depuis la seconde position prédéfinie jusqu'à la cible/structure/infrastructure donnée ou la partie respective de celle-ci sur la base de la seconde mesure/estimation de la position, de la distance et de l'orientation.

7. Le système UAS selon l'une quelconque des revendications 4 à 6, comprenant également un système de terminaison de vol qui inclut un sous-système de terminaison de vol embarqué (1105) installé sur l'unité aérienne (100) et un sous-système de terminaison de vol au sol (210) intégré dans l'unité au sol (200), dans lequel :
• le sous-système de terminaison de vol au sol (210) est configuré pour terminer, automatiquement ou par commande de l'opérateur, le vol de l'unité aérienne (100) en la faisant atterrir si l'occurrence d'une ou plusieurs conditions d'urgence prédéfinies est détectée ; et
• le sous-système de terminaison de vol embarqué (1105) est configuré pour terminer automatiquement le vol de l'unité aérienne (100) en la faisant atterrir si l'occurrence d'une ou plusieurs conditions d'urgence prédéfinies est détectée.

8. Le système UAS selon l'une quelconque des revendications précédentes, dans lequel la cible/structure/infrastructure donnée est une ligne électrique aérienne, et dans lequel le dispositif de charge utile (150) est un dispositif/système/instrument configuré pour réaliser une ou plusieurs activités, telles que des mesures électriques, des installations, des réparations, des opérations de maintenance, des activités de test ou similaires, sur une ou plusieurs parties de ladite ligne électrique aérienne, telles que des conducteurs, des connecteurs, des ensembles d'ancrage, des isolateurs, des supports, des câbles de garde, ou similaires.

9. Utilisation du système UAS tel que revendiqué dans l'une quelconque des revendications précédentes pour réaliser une ou plusieurs tâches prédéfinies sur une cible/structure/infrastructure donnée agencée, ou sur une partie respective de cette dernière positionnée, à une hauteur donnée.

10. Utilisation du système UAS tel que revendiqué dans l'une quelconque des revendications 1 à 8 pour réaliser une ou plusieurs tâches prédéfinies sur une ligne électrique aérienne ou sur des parties de celle-ci.
